# EUROPEAN PATENT SPECIFICATION

(11) **EP 3 643 480 B1**
(45) Date of publication and mention of the grant of the patent: **23.06.2021**
(21) Application number: 18850027.6
(22) Date of filing: 04.01.2018
(51) Int. Cl.: B29C 64/393, B29C 64/182, B29C 64/282, B33Y 50/02, B33Y 30/00, B22F 3/105, B29C 64/153, B29C 64/124, B33Y 10/00

(54) **DATA PROCESSING METHOD FOR THREE-DIMENSIONAL MODEL, AND 3D PRINTING METHOD AND SYSTEM**
DATENVERARBEITUNGSVERFAHREN FÜR DREIDIMENSIONALES MODELL UND 3D-DRUCKVERFAHREN UND -SYSTEM
PROCÉDÉ DE TRAITEMENT DE DONNÉES POUR MODÈLE TRIDIMENSIONNEL ET PROCÉDÉ ET SYSTÈME D'IMPRESSION 3D

(30) Priority: 04.09.2017 CN 201710784346
(43) Date of publication of application: 29.04.2020
(73) Proprietor: Shanghai Union Technology Corporation, Shanghai 201612 (CN)
(72) Inventor: CHEN, Xianfei, Shanghai 201612 (CN); YU, Qingxiao, Shanghai 201612 (CN); WANG, Jincheng, Shanghai 201612 (CN)
(74) Representative: Weickmann & Weickmann PartmbB
(86) International application number: PCT/CN2018/071403
(87) International publication number: WO 2019/041719

(56) References cited:
- EP-A1- 3 007 879
- EP-A1- 3 120 967
- CN-A- 105 881 916
- CN-A- 106 042 390
- CN-A- 106 827 514
- CN-A- 106 971 421
- US-A1- 2014 348 691

## Description

### Field of the Invention

The present application relates to the field of 3D printing, in particular to a 3D printing method, a 3D printing apparatus and a computer readable storage medium.

### Background of the Invention

3D printing technology is a kind of rapid prototyping technology. It is a technique for constructing objects by layer-by-layer printing using adhesive materials such as a powdered metal, plastic and resin based on a digital model file. A 3D printing apparatus manufactures a 3D object through performing such printing technique. 3D printing apparatus has a wide range of applications in the fields of molds, customized goods, medical appliances, and prostheses due to high forming precision. A 3D printing apparatus based on layer-by-layer printing stacks and attaches a plurality of cross-sectional layers according to a three-dimensional model to form a corresponding three-dimensional object. This type of 3D printing apparatus is favored by more and more manufacturers in fields with a high requirement on refinement, such as medical devices, mold manufacturing, and personalized product customization because it is not restricted by mold and is flexible in manufacturing, and it is precise on control of layer thickness.

With the improvement of the quality of product manufactured by the 3D printing apparatus and the increase of the capability of manufacturing its format, manufacturers want to print more three-dimensional objects by the 3D printing apparatus at once. Therefore, some of the 3D printing apparatuses manufacture a plurality of three-dimensional objects simultaneously through multiple energy radiation systems. To avoid the problem that the printing space is limited due to multiple energy radiation systems cannot cooperatively cure a pattern layer, there is at least a line intersection between calibration formats of at least two of the multiple energy radiation systems used in the apparatus, and more preferably, there is an intersection area between calibration formats of two energy radiation systems. a process of cooperative printing by two energy radiation systems is described in a related solution, that is, both energy radiation systems reduce their light energy in the intersection area to ensure that a cured layer located in the intersection area has a higher accuracy.

In fact, compared with a cured layer produced by a single energy radiation system, during use, it's found that there are some defects in the cured layer cured repeatedly by multiple energy radiation systems in accuracy, splicing accuracy, and the like.

Document EP 3 007 879A1 teaches to irradiate a single object falling within an overlapping area with two lasers, which irradiation areas overlap. Document EP 3 120 967A1 in turn teaches to re-define the irradiation areas of each laser to displace the overlapping area, such as to better share the irradiation work between the two lasers. Finally, document US 2014/348691A1 teaches to simultaneously fuse a material by two energy beams in the overlapping area.

### Summary of the Invention

The present application provides a 3D printing method, a 3D printing apparatus, and a computer readable storage medium, for solving the problem that there are some defects in a three-dimensional object manufactured by multiple energy radiation systems in a splicing manner.

To achieve the above and other objectives, in the first aspect, the present application provides a 3D printing method, the method comprises: acquiring at least one associated file package to manufacture a plurality of three-dimensional objects in batches, the at least one associated file package is used for describing printing information of at least one three-dimensional model, wherein, entire projection ranges of at least part of three-dimensional models are located in the first calibration format or the second calibration format, wherein, the first calibration format refers to format data obtained by pre-calibrating a first energy radiation system, and the second calibration format refers to format data obtained by pre-calibrating a second energy radiation system; parsing each associated file package, and when determing that at least part of the associated file packages contain integrity, determing that a three-dimensional object corresponding to each three-dimensional model described by a corresponding associated file package is placed entirely in the first calibration format or in the second calibration format; when determing that at least part of the associated file packages do not contain integrity, adjusting position data in a corresponding associated file package to place a three-dimensional object corresponding to the described three-dimensional model in the first calibration format entirely or in the second calibration format entirely; wherein the first calibration format is overlapped partially with the second calibration format, the first calibration format is selectively cured by the first energy radiation system, and the second calibration format is selectively cured by the second energy radiation system; the integrity relates to whether the three-dimensional model falls entirely within the first calibration format or falls entirely within the second calibration format; controlling the first energy radiation system to selectively cure a three-dimensional model placed in the first calibration format and/or controlling the second energy radiation system to selectively cure a three-dimensional model placed in the second calibration format when determining a position of each three-dimensional object to be manufactured.

In some embodiments in the first aspect, adjusting position data in a corresponding associated file package which does not contain integrity to place a part of the three-dimensional models in the first calibration format in their entirety and place another part of the three-dimensional models in the second calibration format in their entirety.

In some embodiments in the first aspect, the 3D printing method further comprises a step of performing a combination of placement on each three-dimensional model to be printed based on printing information in each associated file package.

In some embodiments in the first aspect, the step of adjusting position data in a corresponding associated file package which does not contain integrity comprises: adjusting position data in at least one associated file package to place the described three-dimensional model entirely in a vacant area in the first calibration format or in the second calibration format according to projection ranges obtained based on position data in the associated file packages, and the vacant area in the first calibration format or in the second calibration format.

In some embodiments in the first aspect, before the step of adjusting position data in at least one associated file package, the method further comprises a step of adjusting position data in another part of the associated file packages placed in the first calibration format and/or the second calibration format based on position data in a corresponding associated file package which contains integrity.

In the second aspect, the present application provides a 3D printing apparatus, the apparatus comprises: a first energy radiation system, configured to selectively cure a material layer within a first calibration format according to the received data of a slicing pattern, wherein, the first calibration format refers to format data obtained by pre-calibrating the first energy radiation system; a second energy radiation system, configured to selectively cure a material layer within a second calibration format according to the received data of a slicing pattern, wherein, the second calibration format refers to format data obtained by pre-calibrating the second energy radiation system, the first calibration format is overlapped partially with the second calibration format; a component platform, configured to attach a patterned cured layer selectively cured by the first energy radiation system or/and the second energy radiation system; a control device, connected with the first energy radiation system and the second energy radiation system, and configured to selectively cure a three-dimensional model by performing a printing method in the first aspect.

In some embodiments in the second aspect, the 3D printing apparatus further comprises a Z-axis drive mechanism connected with the component platform, wherein the control device is further configured to control the Z-axis drive mechanism to adjust a spacing between the component platform and a reference printing surface.

In some embodiments in the second aspect, any one of the first energy radiation system and the second energy radiation system comprises: a projection device for selectively curing in a surface-exposure manner or an energy beam emitting device for selectively curing in a scanning manner.

In the third aspect, the present application provides a computer readable storage medium, the computer readable storage medium stores a first calibration format of a first energy radiation system in a 3D printing apparatus and a second calibration format of a second energy radiation system in the 3D printing apparatus, an associated file package for describing printing information of a three-dimensional model, and a program for adjusting a placement position of the three-dimensional model in the associated file package, wherein the first calibration format refers to format data obtained by pre-calibrating a first energy radiation system, and the second calibration format refers to format data obtained by pre-calibrating a second energy radiation system, the first calibration format is overlapped partially with the second calibration format; and a printing method in the first aspect is performed when the program is invoked.

In the 3D printing method, the apparatus, and the storage medium provided in the present application, a three-dimensional model with a small format is placed in one of calibration formats of the 3D printing apparatus containing multiple energy radiation systems, the three-dimensional model can be manufactured by one energy radiation system even if a placement position of the three-dimensional model is located partially or entirely in an overlapping area, so that the opportunity of manufacturing the three-dimensional object by a single energy radiation system can be increased.

In addition, for the positions of a plurality of three-dimensional models in the first and second calibration formats, placement positions of at least part of the three-dimensional models are adjusted, so that the three-dimensional models can be placed in one calibration format as much as possible.

Furthermore, for a three-dimensional model placed in the overlapping area, a selection tag of an energy radiation system is provided to the 3D printing apparatus based on integrity, so that the opportunity of manufacturing the three-dimensional object by a single energy radiation system can be increased.

### Brief Description of Drawings

Fig. 1 is a flow diagram of a data processing method of the present application in an embodiment.
Fig. 2 is a schematic diagram of a three-dimensional model placed in an overlapping area displayed in the present application.
Fig. 3 is a schematic diagram of a placement position prompt displayed in a display interface in the present application.
Fig. 4 is a flow diagram of a data processing method of the present application in an embodiment.
Fig. 5a is a schematic diagram of the placements of three-dimensional models M5 and M6.
Fig. 5b is a schematic diagram of the placement of a three-dimensional model M7 on the basis of the three-dimensional models M5 and M6 shown in Fig. 5a.
Fig. 6 is a flow diagram of a data processing method of the present application in another embodiment.
Fig. 7 is a flow diagram of a data processing method of the present application in yet another embodiment.
Fig. 8 is a schematic diagram of the placement of three-dimensional models M1, M2, M3 and M4 within a region enclosed by a first calibration format and a second calibration format together.
Fig. 9 is a structure diagram of a data processing system of the present application in an embodiment.
Fig. 10 is a structure diagram of a 3D printing apparatus of the present application in an embodiment.
Fig. 11 is a flow diagram of a 3D printing method of the present application in an embodiment.
Fig. 12 is a flow diagram of a 3D printing method of the present application in another embodiment.
Fig. 13 is a flow diagram of a 3D printing method of the present application in yet another embodiment.
Fig. 14 is a structure diagram of a 3D printing apparatus of the present application in another embodiment.

### Detailed Description of the Embodiments

Embodiments of the present application will be described below with specific examples, and other advantages and effects of the present application will be apparent to those skilled in the art from the disclosure in the specification. The present application can be carried out or applied in other different embodiments, and various modifications or changes can also be made to the details of the specification based on different ideas and applications without departing from the spirit of the present application.

It should be noted that the structures, proportions, sizes and the like shown in the accompanying drawings of the specification are only used in conjunction with the disclosure of the specification for understanding and reading by those skilled in the art, and are not intended to limit the conditions for implementing the present application, and thus have no technically substantive meaning. Any structural modification, proportional relationship change or size adjustment should be encompassed within the scope that can be covered by the technical content disclosed in the present application if they do not affect the effects and objectives achieved by the present application. Moreover, the terms "upper", "lower", "left", "right", "intermediate" and "a/an" as used in this specification are also for convenience of clear description, and are not intended to limit the scope for implementing the present application. Changes or adjustments of relative relationship thereof are also considered to be within the scope for implementing the present application if there is no substantive change in technical content.

Here, a 3D printing apparatus including multiple energy radiation systems can print a three-dimensional object with a large format, and can also print a plurality of three-dimensional objects with a small format simultaneously to improve the manufacturing efficiency of products. When printing a three-dimensional object with a small format, such 3D printing apparatus can manufacture the product by a single energy radiation system, or by multiple energy radiation systems in a splicing manner coordinately. For an object that can be placed in one format, such as a tooth, pendant or cup, contour sharpness is affected through being printed in a splicing manner by multiple energy radiation systems, which also increases the complexity of subsequent processes. Therefore, when the 3D printing apparatus containing multiple energy radiation systems is used to print small objects in batches, the problem to be solved by the present application is how to avoid printing in a splicing manner as much as possible.

Based on this, the present application provides a data processing method for a three-dimensional model. The data processing method is used in a phase of data processing on the three-dimensional model before printing. At least part of steps provided in the present application can be performed before or after cross-sectional layering on the three-dimensional model, or can also be performed coordinately with the cross-sectional layering. The cross-sectional layering process includes performing cross-sectional partition on the three-dimensional model along a Z-axis (that is, along the height) according to a preset layer height, and the obtained each cross-sectional layer of the three-dimensional model corresponds to a cured layer when manufacturing. A slicing pattern outlined by a contour of the three-dimensional model is formed on a cross-section layer formed by every adjacent cross-section partition. In some embodiments, we deem that contour lines of an upper cross-sectional surface and a lower cross-sectional surface of each cross-sectional layer are consistent if the cross-sectional layer is thin enough. In some other embodiments, a slicing pattern outlined by the contour line of the upper cross-sectional surface or the lower cross-sectional surface of the cross-sectional layer represents a slicing pattern of the corresponding cross-sectional layer.

The data processing method in the present application is mainly executed by a data processing system. The data processing system includes software and hardware mounted in a computer device. The computer device includes any electronic device capable of numerical, data, and logical processing. For example, the computer device includes, but is not limited to, a desktop computer, a handheld computer, or an intelligent terminal based on an embedded operating system. The data processing system pre-stores a three-dimensional model to be layered, and calibration formats of a first energy radiation system and a second energy radiation system in a 3D printing apparatus which is used to manufacture the three-dimensional model. The 3D printing apparatus includes but is not limited to include the first energy radiation system and the second energy radiation system only. Here, the technical solution is described by taking a 3D printing apparatus including two energy radiation systems only as an example. In addition, to describe the two calibration formats differentially, a first calibration format is used as the calibration format corresponding to the first energy radiation system, and a second calibration format is used as the calibration format corresponding to the second energy radiation system. The first calibration format is overlapped with the second calibration format. The first calibration format and the second calibration format are format data obtained by pre-calibrating the first energy radiation system and the second energy radiation system. For example, the first calibration format and the second calibration format record information (such as boundary coordinates) of boundary capable of being cured by the corresponding energy radiation system, and can even record overlapping information (such as coordinate of intersection point between an overlapping area and boundary line) of the two calibration formats and the like. Each of the calibration formats may be a regular shape such as a circle, an ellipse, a triangle, a rectangle, or a polygon, and may also be an irregular shape. For example, a portion of boundary line that forms the boundary line of the overlapping area of the calibration format is a curve with a curvature, and a portion of boundary line that does not form the boundary line of the overlapping area of the calibration format is a curve with another curvature, and the two curves are connected end to end to form a closed calibration format.

The data processing system obtains a three-dimensional model to be placed through an import operation of a technical person; and places the three-dimensional model in the first calibration format or the second calibration format based on the first calibration format of the first energy radiation system and the second calibration format of the second energy radiation system in the 3D printing apparatus.

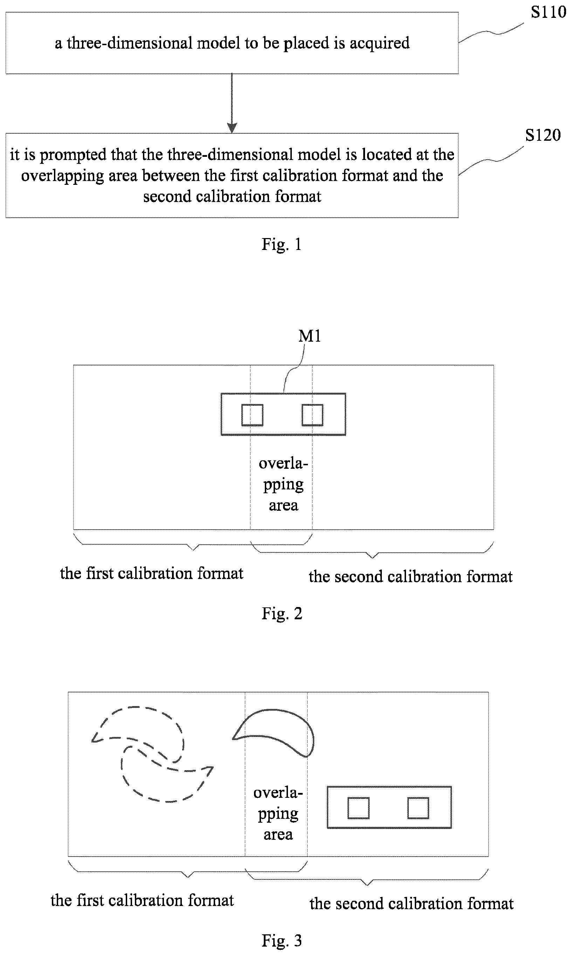

Please refer to Fig. 1, which shows a flow diagram of a data processing method. By performing the following steps, the data processing system determines that the acquired three-dimensional model is placed in the first calibration format or the second calibration format, or determines that the three-dimensional model is printed through splicing printing technology. The sizes of the first calibration format and the second calibration format is equal or is different. For example, the area of the first calibration format is m1 × m2, and the area of the second calibration format is m3 × m2, where m1 ≦ m3. As shown in Fig. 1:
In step S110, a three-dimensional model to be placed is acquired.

Here, the data processing system includes a display interface, boundary information of a calibration format formed by merging the first calibration format and the second calibration format is displayed on the display interface. The data processing system places and displays the acquired three-dimensional model at an initial position, or an unoccupied position, or a manually adjusted position within the first calibration format and the second calibration format. When the three-dimensional model is placed in an overlapping area between the first calibration format and the second calibration format, step S120 is performed; otherwise, it is determined that the placement of the three-dimensional model is finished.

In step S120, it is prompted that the three-dimensional model is located at the overlapping area between the first calibration format and the second calibration format. For example, referring to Fig. 2, which shows a schematic diagram of a three-dimensional model located in the overlapping area, as shown, the data processing system detects whether a projection range of the imported three-dimensional model M1 is across the overlapping area enclosed by overlapping information. If so, the projection range or the overlapping area is highlighted. If not, such a highlight prompt is absent. Here, the manner of highlight prompt is only an example, but not a limitation to the present application.

In the case that there are a plurality of three-dimensional models, the data processing system detects the placement position of each three-dimensional model, and provides a corresponding prompt when one or some of three-dimensional models is/are across the overlapping area. The technical person adjusts the placement positions of the one or some of three-dimensional models according to the prompt, such that a part of the three-dimensional models are placed in the first calibration format in their entirety and another part are placed in the second calibration format in their entirety, and no three-dimensional models are across the overlapping area. The technical person can keep three-dimensional models that cannot be placed in the first calibration format or the second calibration format in their entirety in the overlapping area or remove these.

It should be noted that the technical person can adjust the placement position of the three-dimensional model based on a system prompt. Layering and supporting operations can be performed after the placement is finished. In addition, the placement position can be adjusted after layering and supporting operations are performed. Neither of the above two manners affects the implementation of the data processing method for the three-dimensional model described in the present application.

In the case that the placement position is adjusted before performing operations such as layering and supporting operations, the method can also adjust the printing order of the three-dimensional model according to the projection ranges of the three-dimensional model at different angles. For example, the three-dimensional model is a long cube, and the placement angle of the long cube is adjusted through rotation such that the long cube is printed in a direction perpendicular to a smaller cross section rather than in a direction perpendicular to a larger cross section. This allows more three-dimensional models to be placed.

In some embodiments, the data processing system determines and adjusts the placement position of the acquired three-dimensional model by itself. In other words, when acquiring a plurality of three-dimensional models, the data processing system places a part of the three-dimensional models in the first calibration format in their entirety and places another part in the second calibration format in their entirety. The three-dimensional model placed in the overlapping area of one calibration format is also considered to be placed in one of the calibration formats.

In an embodiment, the data processing system calculates a projection range of the three-dimensional model being imported, determines vacant area in each calibration format, and places the three-dimensional model in a vacant area larger than its projection range. A minimum range of the vacant area is consistent with the projection range of the three-dimensional model, or is consistent with an area that is covered by the projection range and a preset spacing together. In the case that the three-dimensional model can be placed in both calibration formats, the data processing system selects one vacant area randomly. Alternatively, based on the position of the vacant area in the corresponding calibration format, the data processing system places the three-dimensional model in a vacant area that is more conformable to other placement condition such as a vacant area closer to the center of the format. The other placement condition includes but is not limited to at least one of: based on equalization of the number of three-dimensional models in each calibration format, based on the number of layers of each three-dimensional model, based on layered printing data for describing each three-dimensional model, and the like.

In yet another embodiment, three-dimensional models are imported into the data processing system in batches. In the data processing method, based on projection ranges of the three-dimensional models to be placed and a vacant area in the first calibration format or in the second calibration format, one of the vacant areas is selected to place the three-dimensional models.

To easy of description, a three-dimensional model placed in the first calibration format or the second calibration format is called a first three-dimensional model, and a three-dimensional model that is imported and to be placed is called a second three-dimensional model.

In some embodiments, when determining that a projection range of the second three-dimensional model falls into at least one calibration format through matching, the data processing system provides an adjustment prompt to the technical person, thus the technical person adjusts a placement position of the first three-dimensional model or the second two-dimensional model. For example, in the display interface, the imported second three-dimensional model is suspended over each calibration format to indicate that the three-dimensional model has not been placed. The data processing system compares the projection range of the second three-dimensional model with respective vacant area in the first calibration format and in the second calibration format. If it is determined that the second three-dimensional model can be placed in the first calibration format, a prompt is presented in the corresponding vacant area by some manners such as contour dashed line, so that the technical person places the imported second three-dimensional model at the prompted position. If it is determined that the second three-dimensional model can be placed in the first calibration format and the second calibration format, a corresponding prompt is provided in each vacant area so that the technical person selects one of prompted positions for placement.

The placement position prompted by the data processing system is a placement position where the second three-dimensional model is translated to the vacant area, or is a placement position where the second three-dimensional model is rotated within the calibration format to the vacant area. Referring to a schematic diagram of a placement position prompt shown in Fig. 3, as shown, a solid line in the format represents a current placement position of the second three-dimensional model, and a dashed line represents a prompt of a vacant area where the second three-dimensional model can be placed.

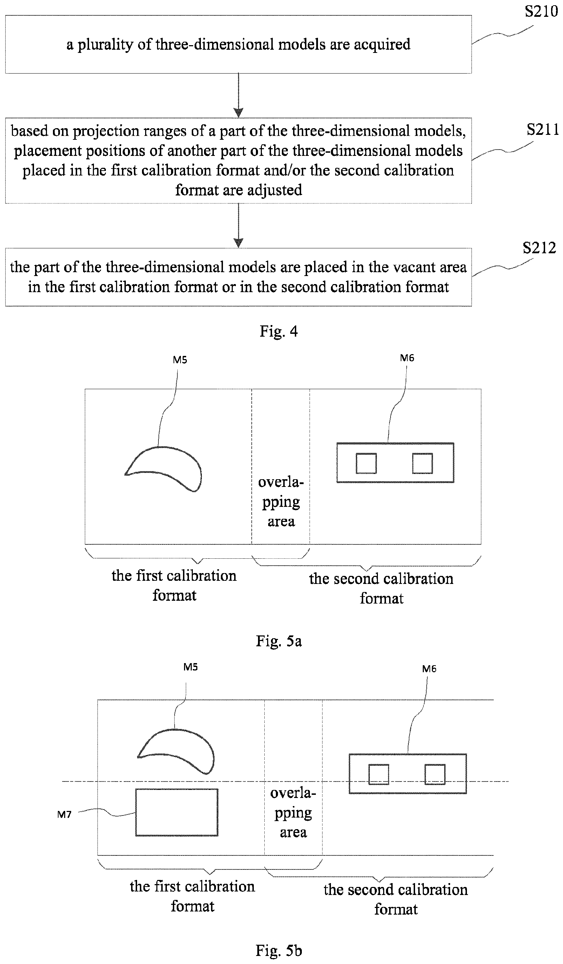

In another embodiment, referring to Fig. 4, which shows a flow diagram of the data processing method in another embodiment, as shown in Fig. 4:
In step S210, a plurality of three-dimensional models are acquired. The plurality of three-dimensional model are acquired in batches, or at the same time. When the acquired three-dimensional model is the first one, it can be placed according to the foregoing placement manner. When the acquired three-dimensional model is the second one and even more which is/are imported in batches, steps S211 and S212 are performed.
In step S211, based on projection ranges of a part of the three-dimensional models, placement positions of another part of the three-dimensional models placed in the first calibration format and/or the second calibration format are adjusted. The part of the three-dimensional models are three-dimensional models imported in batches currently, and the another part of the three-dimensional models are three-dimensional models imported in batches previously.
In step S212, the part of the three-dimensional models are placed in the vacant area in the first calibration format or in the second calibration format.

For example, a first spacing between three-dimensional models, and a second spacing between a three-dimensional model and a calibration format boundary are preset in the data processing system. Please refer to Figs. 5a and 5b, which show a schematic diagram of the placements of first three-dimensional models M5 and M6, as shown, and a schematic diagram of the placement of a second three-dimensional model M7 on the basis of the first three-dimensional models M5 and M6, respectively. The three-dimensional models M5 and M6 are placed in the first and second calibration formats, respectively. When the three-dimensional model M7 is received, the three-dimensional models M5 and M7 are arranged adjacent to each other with the first spacing therebetween, and it is detected whether an overall projection range of M5 and M7 is located within the first calibration format. If so, placement positions of the three-dimensional models M5 and M7 are adjusted. If not, the three-dimensional models M6 and M7 are arranged adjacent to each other with the first spacing therebetween, and it is detected whether an overall projection range of M6 and M7 is located in the second calibration format. If so, placement positions of the three-dimensional models M6 and M7 are adjusted. If not, the three-dimensional models M5, M6, and M7 are placed with a spacing which is equal to or larger than the first spacing and as a whole within a format that is across the overlapping area between two calibration formats. When the three-dimensional model M7 cannot be placed in any calibration format but can be placed in an area that crosses the overlapping area, M7 is placed across the overlapping area directly to print the three-dimensional model M7 by splicing technology.

Here, to place the second three-dimensional model in the first calibration format or the second calibration format as so as possible, the placement position of the first three-dimensional model is adjusted by translating the placement position of the first three-dimensional model only, or rotating the first three-dimensional model within a format only, or combination thereof. Similarly, it also can adjust the second three-dimensional model by translation and/or three-dimensional rotation while adjusting the first three-dimensional model, so as to print more three-dimensional objects in one calibration format at the same time.

It should be noted that the three-dimensional model imported in batches or at the same time is not limited to a single one, and may also be a plurality of three-dimensional models. For a plurality of three-dimensional models imported in each batch, the foregoing steps S211 and S212 are performed repeately to place the imported three-dimensional models into the first calibration format or the second calibration format one by one.

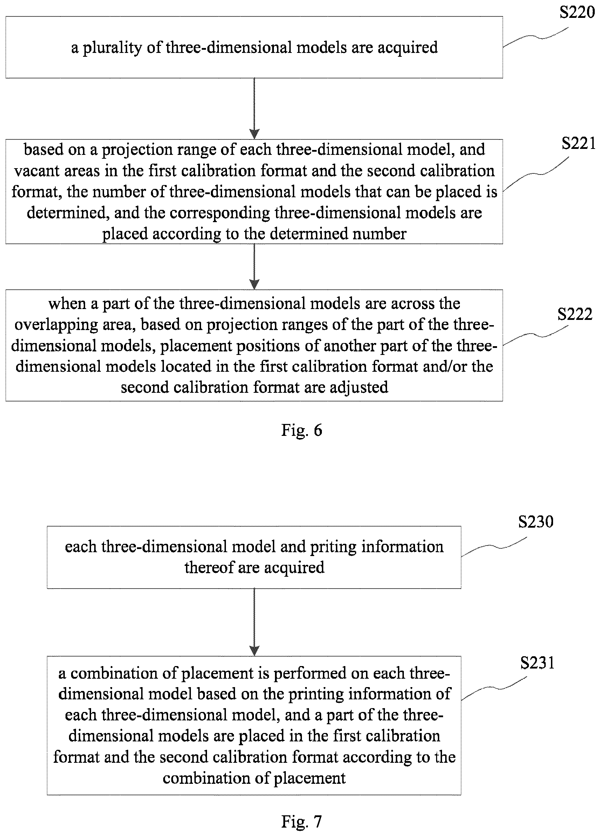

In another embodiment, referring to Fig. 6, which shows a flow diagram of another data processing method in the present application, as shown:
In step S220, a plurality of three-dimensional models are acquired. Here, similar to the acquiring steps in the previous examples, a technical person can import a plurality of three-dimensional models stored locally or in an external storage device or in a server into the data processing system.
In step S221, based on a projection range of each three-dimensional model, and vacant areas in the first calibration format and the second calibration format, the number of three-dimensional models that can be placed is determined, and the corresponding three-dimensional models are placed according to the determined number.
In step S222, when a part of the three-dimensional models are across the overlapping area, based on projection ranges of the part of the three-dimensional models, placement positions of another part of the three-dimensional models located in the first calibration format and/or the second calibration format are adjusted.

In some specific examples, the data processing system determines, based on an average projection range of each imported three-dimensional model, the number N2 of the average projection range that can be accommodated in the first calibration format and the second calibration format together; if the number N1 of the three-dimensional models is smaller than N2, the three-dimensional models are evenly distributed within the ranges of the first calibration format and the second calibration format. When a three-dimensional model is across the overlapping area between the two calibration formats, a corresponding prompt is provided, or spacings between other three-dimensional models are adjusted according to steps S211 and S212, so that the three-dimensional model crossing the overlapping area is placed in one of the calibration formats. If the number N1 of the three-dimensional models is larger than N2, it is prompted that not all three-dimensional models can be placed.

In another embodiment, referring to Fig. 7, which shows a flow diagram of the present application in another embodiment, as shown:
In step S230, each three-dimensional model and priting information thereof are acquired. The printing information includes but is not limited to at least one of: a projection range of the three-dimensional model, the number of layers, the number of pixel used for describing a slicing pattern of each layer, the number of coordinate used for describing the slicing pattern of each layer, the total number of all coordinates in the three-dimensional model, and the like.

Here, the data processing system acquires the three-dimensional model and the printing information thereof from other computer device. The computer device performs layering and supporting operations and obtains the printing information. The data processing system further performs the following step S231 after performing the layering and supporting operations on the acquired plurality of three-dimensional models to obtain the respective printing information.

In step S231, a combination of placement is performed on each three-dimensional model based on the printing information of each three-dimensional model, and a part of the three-dimensional models are placed in the first calibration format and the second calibration format according to the combination of placement. The combination of placement includes but is not limited to at least one of: a combination of placing at least part of the three-dimensional models in one calibration format, and a combination of placing at least part of the three-dimensional models in different calibration formats.

Here, the manner of determining the combination of placements of at least part of the three-dimensional models through analyzing the printing information by the data processing system includes, but is not limited to:
1) The data processing system determines at least two three-dimensional models with the largest number of layer through analyzing the number of layers, and places the at least two three-dimensional models with the largest number of layer in the first calibration format or the second calibration format separately. For example, when a preset or pre-input type of energy radiation system is a type of surface-exposure device containing a projection device, the data processing system compares the number of layer of each three-dimensional model, and places two three-dimensional models with the largest number of layers in the first calibration format and the second calibration format respectively, and selects placement positions of other three-dimensional models based on the determined two three-dimensional models, thereby placing all three-dimensional models in a single calibration format as so as possible.
2) The data processing system performs different combinations on each three-dimensional model according to maximum placement ranges corresponding to the first calibration format and the second calibration format, respectively, and places each three-dimensional model in the first calibration format and/or the second calibration format respectively according to the different combinations. At the same time, it calculates time lengths required to print all three-dimensional models under the different combinations, respectively, and selects a combination corresponding to the shortest time length to place each three-dimensional model. The maximum placement range refers to the maximum number of three-dimensional models that can be placed in the first calibration format or the second calibration format separately and without overlapping with each other. For example, the data processing system selects multiple combinations for each three-dimensional model according to the maximum placement range; and when a preset or pre-input type of energy radiation system is a scanning curing type containing an energy beam emitting device, the data processing system simulates time length for printing in each calibration format according to the maximum number of layers and the total number of coordinates of the three-dimensional models located in the first calibration format or the second calibration format in each combination, and then selects a combination with the shortest time length to perform placement. In still other embodiments, the data processing system combines the various data processing schemes described above to determine a placement position of each three-dimensional model.

It should be noted that, due to the limitation of the projection range of the three-dimensional model and vacant area, during placement, for three-dimensional models which are belong to one batch and cannot be placed only in the first calibration format or the second calibration format, the three-dimensional model is selected to place in an area crossing the two calibration formats, so as to be printed by a 3D printing apparatus using splicing technology.

To inform the 3D printing apparatus of which energy radiation system is to be used for manufacturing a three-dimensional model, the data processing method further includes a step of determining the first energy radiation system and/or the second energy radiation system used for selectively curing the three-dimensional model based on integrity of the three-dimensional model in the first calibration format and in the second calibration format respectively.

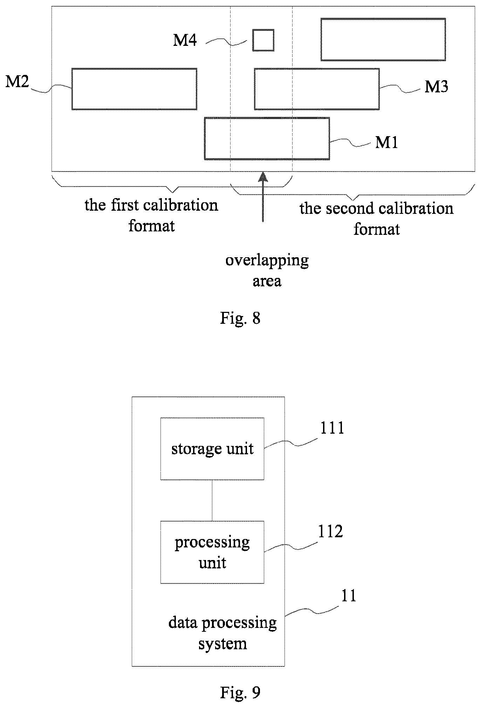

Here, please refer to Fig. 8, which shows placement positions of three-dimensional models M1, M2, M3 and M4 within a region enclosed by the first calibration format and the second calibration format together. As shown, the three-dimensional model M1 is across the overlapping area between the first calibration format and the second calibration format, and its integrity is marked as P1; the three-dimensional model M2 is located in the first calibration format in its entirety, and its integrity is marked as P2; the three-dimensional model M3 is partially located in the overlapping area and is located in the second calibration format in its entirety, and its integrity is marked as P3; the three-dimensional model M4 is located in the overlapping area in its entirety, and its integrity is marked as P4. The integrity is marked according to a percentage of the three-dimensional model placed in the respective calibration format to the entrire three-dimensional model, or is marked when the three-dimensional model is located in the corresponding calibration format entirely. For example, P1 indicates a% in the first calibration format, b% in the second calibration format and (100-a-b)% in the overlapping area; P2 indicates 100% in the first calibration format and 0% in the second calibration format; P3 indicates 100% in the second calibration format and 0% in the first calibration format; and P4 indicates 100% in the first calibration format and 100% in the second calibration format.

The integrity may also be described by coordinate of projection contour point of the three-dimensional model in the first calibration format and/or the second calibration format. For example, P1 includes coordinates of a plurality of contour points of a projection contour of the three-dimensional model M1 in the first calibration format and the second calibration format, wherein the coordinate of each contour point in the overlapping area is represented by coordinate in the first calibration format only, or by coordinate in the second calibration format only, or by two sets of coordinates which represnet a same projection contour point.

The integrity may also be described by position data of each slicing pattern in the three-dimensional model. Thus, the 3D printing apparatus also determines an energy radiation system used for the slicing pattern of each layer. For example, coordinate of contour point of the slicing pattern of each layer in the three-dimensional model M4 is represented by two sets of coordinates, wherein one set of coordinates corresponds to the first calibration format and the other set of coordinates corresponds to the second calibration format. Thus, the 3D printing apparatus selects one of the energy radiation systems to selectively cure a material layer according to its selection strategy. As another example, the coordinate of the contour point of the slicing pattern of each layer in the three-dimensional model M4 is represented only by the coordinate in the first calibration format or in the second calibration format. Thus, the 3D printing apparatus selects a corresponding energy radiation system to selectively cure the material layer according to the integrity.

The integrity may also be marked based on whether the three-dimensional model falls into one of the calibration formats entirely, so that the 3D printing apparatus controls the corresponding energy radiation system based on the integrity mark. For example, the P1 indicates M1 needs to be printed by the first energy radiation system and the second energy radiation system in a splicing manner; the P2 indicates M2 is located in the first calibration format; the P3 indicates M3 is located in the second calibration format; and the P4 indicates M4 is located in the first calibration format with a smaller area.

It should be noted that the above integrity marks are merely examples and are not limitations on the present application. Those skilled in the art can combine or change the marking manners according to the above examples, which should be regarded as example variations based on the technical idea of the present application. For example, the integrity is marked based on whether the contour of the slicing pattern of each layer entirely falls into one of the calibration formats, and thus the 3D printing apparatus determines an energy radiation system to be used according to the integrity of each layer, so that one cured layer can be cured by one energy radiation system independently as so as possible.

The data processing system can add the integrity of each three-dimensional model into a printing file of each three-dimensional model, so that the 3D printing apparatus which receives the printing file determines to use the first energy radiation system and/or the second energy radiation system to cure each cured layer of the three-dimensional model according to the integrity.

It should be noted that the foregoing embodiments and combinations of the embodiments are merely examples based on the technical ideas of the present application and are not a limitation on the present application.

The present application further provides a data processing system. The data processing system includes software and hardware installed in a computer device. Please refer to Fig. 9, which shows a structure diagram of the data processing system in an embodiment. As shown, the data processing system 11 includes: a storage unit 111 and a processing unit 112.

The storage unit 111 is used for storing a first calibration format of a first energy radiation system and a second calibration format of a second energy radiation system in a 3D printing apparatus, a three-dimensional model, and a program for adjusting a placement position of the three-dimensional model, wherein the first calibration format is overlapped with the second calibration format. The number of the three-dimensional model is one or more. The three-dimensional model is a three-dimensional model obtained by CAD. The storage unit 111 further includes printing information for each three-dimensional model, wherein the printing information is obtained after layering and supporting operations are performed on the three-dimensional model, and the printing information includes but is not limited to at least one of: a projection range of the three-dimensional model, the number of layers, the number of pixel used for describing the slicing pattern of each layer, the number of coordinate used for describing the slicing pattern of each layer, the total number of all coordinates in the three-dimensional model, and the like.

The storage unit 111 includes a non-volatile memory and a volatile memory. The non-volatile memory includes but is not limited to a solid state hard disk, a USB flash disk, a mobile hard disk, etc. The non-volatile memory includes but is not limited to an memory or a register, etc.

The processing unit 112 is connected with the storage unit 111, and is used for incoking and executing the program for adjusting a placement position of the three-dimensional model, and performing read and write operations on the storage unit 111 according to a technical person's operation event, program generation event or the like during the execution, to determine the placement position of the three-dimensional model in the first calibration format or the second calibration format, and generate position data of the three-dimensional model based on the placement position.

The processing unit 112 performs any one or combination of more exemplary steps in the foregoing data processing method through executing the program. The three-dimensional model placed in the overlapping area of one calibration format is also considered to be placed in one of the calibration formats.

After the aforementioned data processing, layering and supporting operations, the three-dimensional model is saved in the form of an associated file package. The associated file package does not necessarily contain integrity, but contains layering information (such as the number of layers and/or a layer height) of a main body of the three-dimensional model, and layering information (such as the number of layers and/or a layer height) of a support of the three-dimensional model, position data of the three-dimensional model, data for describing the slicing pattern of each layer (such as pixel data or coordinate data corresponding to the slicing pattern), and the like. The position data includes but is not limited to position coordinate of a central axis, position coordinate of the contour of each layer, position reference point coordinate of the three-dimensional model, and the like. The above information and data are partially or completely encapsulated in files corresponding to the main body and support, wherein each file further contains a layer height corresponding to the main body or support. The associated file package further includes a description file for describing additional information about printing of the three-dimensional model, and the like. The additional information includes but is not limited to the integrity and the like.

When the associated file package is imported into a 3D printing apparatus, the 3D printing apparatus manufactures a corresponding three-dimensional object according to a file in the associated file package.

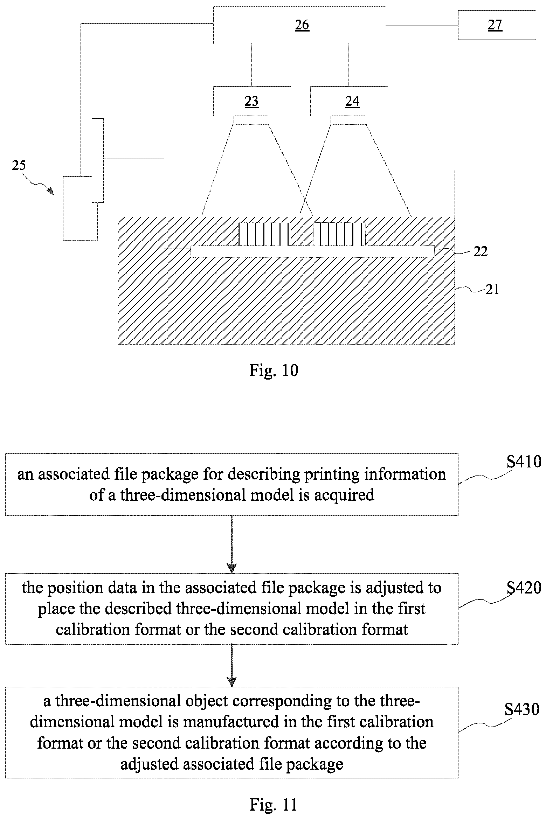

The present application further provides a 3D printing apparatus. The 3D printing apparatus includes a container or forming chamber, a first energy radiation system, a second energy radiation system, a component platform, a Z-axis drive mechanism and a control device. The 3D printing apparatus further includes a data processing device. Please refer to Fig. 10, which shows a structure diagram of the 3D printing apparatus of the present application in an embodiment.

In some embodiments, as shown in Fig. 10, the container 21 is used for containing a photocurable material. The photocurable material includes any liquid material or powder material that is easily photocurable. For example, the liquid material includes a photocurable resin liquid or a resin liquid doped with a mixed material of ceramic powder, a color additive and the like. The powder material includes but is not limited to ceramic powder, color added powder, and the like. For a 3D printing apparatus based on bottom exposure, the container 21 used therefor is shallow and has a transparent bottom surface. The transparent bottom surface is a reference printing surface on which the first energy radiation system 23 and the second energy radiation system 24 project a pixel image or scan a light spot path. For a 3D printing apparatus based on top exposure, the container 21 used therefor is relatively deeper, and the surface of the photocurable material contained or laid therein is a reference printing surface on which the first energy radiation system 23 and the second energy radiation system 24 project a pixel image or scan a light spot path.

In some other embodiments, the forming chamber contains powder to be sintered. The powder includes any material that is easy to be melted and sintered into a cured layer with a desired shape by electromagnetic waves, laser, or an electron beam, including but not limited to metal powder, ceramic powder, etc. The powder is laid on a component platform located in the forming chamber.

The first energy radiation system 23 is used for selectively curing a material layer within the first calibration format according to the received data of a slicing pattern.

The second energy radiation system 24 is used for selectively curing a material layer within the second calibration format according to the received data of a slicing pattern. The first calibration format is overlapped with the second calibration format. The sizes of the first calibration format and the second calibration format may be equal to or different with each other. For example, the area of the first calibration format is m1 × m2, and the area of the second calibration format is m3 × m2, where m1 ≦ m3. Each of the calibration formats may be a regular shape such as a circle, an ellipse, a triangle, a rectangle, or a polygon, and may also be an irregular shape. For example, a portion of boundary line of the calibration format that forms the boundary line of the overlapping area is a curve with a curvature, and a portion of boundary line that does not form the boundary line of the overlapping area is a curve with another curvature. The two curves are connected end to end to form a closed calibration format.

The material layer can be regarded as a material layer which is laid with the aforementioned powder or liquid, and is to be photo-cured or to be sintered and which has a certain thickness.

As radiation principles of the first and second energy radiation systems (23, 24) are different, the data of the slicing pattern received thereby is also different. Generally, the first and second energy radiation systems (23, 24) are configured as the same type of energy radiation system. For example, both energy radiation systems include: an energy beam emitting device for performing selective curing in a scanning manner. The energy beam emitting device for performing selective curing in a scanning manner includes a laser emitter or an electromagnetic wave emitter, a lens group located on an outgoing path of one of the emitters, and a galvanometer group located on a light outgoing side of the lens group (both are not shown). The laser emitter or the electromagnetic wave emitter adjusts energy of an output laser beam or electromagnetic beam in a controlled manner. For example, the laser emitter is controlled to emit a laser beam with a predetermined power and to stop emitting the laser beam. As another example, the laser emitter is controlled to increase the power of a laser beam and to reduce the power of a laser beam. The lens group is used to adjust a focus position of laser beam. The galvanometer group is used to scan with a laser beam in a two-dimensional space of the reference printing surface in a controlled manner, and the photocurable material scanned with the light beam is cured into a corresponding patterned cured layer. The energy beam emitting device for performing selective curing in a scanning manner further includes an electron beam emitter, an electron beam scanner, and the like. Controlled by the electron beam scanner, electron beam scans in a corresponding calibration plane to selectively cure metal powder and obtain a cured layer corresponding to the slicing pattern.

Alternatively, both energy radiation systems include a projection device for performing selective curing in a surface exposure manner. For example, the projection device includes a DMD chip, a controller and a storage module. The storage module stores a slicing pattern obtained after a 3D component model is layered. Switches for each pixel point on a layered image are used to selectively cure the material layer in the corresponding calibration format. The DMD chip looks like a small mirror in appearance, and is packaged in a closed space formed by metal and glass. In fact, this mirror is composed of hundreds of thousands or even millions of micromirrors, each micromirroe represents a pixel, and the projected image is composed of these pixels. The DMD chip can be simply described as micromirror and semiconductor optical switch corresponding to the pixel point, and the controller allows/prohibits light reflection by each micromirror through controlling each optical switch in the DMD chip, thereby selectively curing the material layer in the corresponding calibration format according to pixel data of the corresponding slicing pattern, so that the corresponding material layer is patterned cured.

To ensure the two energy radiation systems coordinately print a three-dimensional object with a larger format, there are overlapping area in the calibration formats of the two energy radiation systems. Also, manufacturing efficiency for printing small-format three-dimensional objects in batches can be improved by using multiple energy radiation systems.

The component platform 22 is used for attaching a patterned cured layer selectively cured by the first energy radiation system 23 and/or the second energy radiation system 24. Here, the component platform 22 includes one or more component boards, which accumulatively attaches the patterned cured layer. In the case that the component platform 22 includes one component board, the area of the component board is greater than or equal to the area of a format formed after the first calibration format and the second calibration format are merged. In the case that the component platform 22 includes a plurality of component boards, the component boards are spliced together and attach the cured layer being selectively cured by the first energy radiation system 23 and the second energy radiation system 24.

The Z-axis drive mechanism 25 is connected with the component platform 22, and is used for moving along a vertical axial direction in a controlled manner to adjust a spacing between the component platform 22 and the reference printing surface. In a 3D printing apparatus based on bottom exposure, when the Z-axis drive mechanism 25 drives the component platform 22 to descend, it is usually to lower the component platform 22 or the patterned cured layer attached to the component platform 22 to a position spaced from the bottom of the container 21 by a layer height of the cured layer, so as to selectively cure the material filled in the spacing. When the Z-axis drive mechanism 25 drives the component platform 22 to ascend, it is usually to separate the patterned cured layer from the bottom of the container 21. In a 3D printing apparatus based on top exposure, the Z-axis drive mechanism 25 drives the component platform 22 to descend for a layer height of the cured layer, so that the material in the container 21 or an external material fills the spacing caused by the descending.

The control device 26 is connected with the first energy radiation system 23 and the second energy radiation system 24, and is used for controlling the first energy radiation system 23 and the second energy radiation system 24 to selectively cure a three-dimensional model placed in the corresponding calibration format.

Here, the control device 26 includes a storage unit, a processing unit, an interface unit and the like (none is shown). The storage unit includes a non-volatile memory and a volatile memory. The non-volatile memory is, for example, a solid state hard disk or a USB flash disk, etc. The volatile memory includes an memory or a register.

The processing unit includes at least one of a CPU or a chip integrated with a CPU, a programmable logic device (FPGA), and a multi-core processor. The processing unit is connected with the storage unit via a system bus, reads data stored in the storage unit and writes data to the storage unit. The read data includes an associated file package read from the non-volatile memory, and previously written temporary data read from the volatile memory, and is used for controlling the first energy radiation system 23 and/or the second energy radiation system 24 to perform selective curing according to data of the slicing pattern of each layer in the associated file package. The written data includes: the above-mentioned associated file package received via the interface unit, and data temporarily stored during program execution. For example, the processing unit provides a corresponding pixel image to the projection device, and the projection device controls the DMD chip according to a pixel position in the image to selectively cure the material layer in the corresponding calibration format. As another example, the processing unit provides corresponding coordinate data to the first energy radiation system 23 and/or the second energy radiation system 24, and a controller in each energy radiation system controls an output power of a respective laser generator or electromagnetic wave emitter or electron beam emitter, and controls a rotation angle of a corresponding energy beam, so as to scan the material layer in the corresponding calibration format along a path formed by coordinates in the slicing pattern of each layer.

The interface unit includes a plurality of interface ports, which are respectively connected with a device that is packaged independently in the 3D printing apparatus and transmits data via interface such as the first energy radiation system 23, the second energy radiation system 24, the Z-axis drive mechanism 25. The device further includes at least one of a prompt device, a human-machine interaction device, and the like.

The storage unit also stores a program for coordinating the Z-axis drive mechanism 25 to work cooperatively with the first energy radiation system 23 and the second energy radiation system 24 to manufacture a three-dimensional object. The processing unit first invokes and executes the program to control the Z-axis drive mechanism 25 in sequence to adjust a spacing between the component platform 22 and the reference printing surface, and to control the first energy radiation system 23 and/or the second energy radiation system 24 to perform selective curing. Taking a top-exposure 3D printing apparatus as an example, the processing unit instructs the Z-axis drive mechanism 25 to descend by a cured layer spacing according to curing completion information fed back by each energy radiation system, and the Z-axis drive mechanism 25 executes the instruction according to the cured layer spacing described in the associated file package.

Controlling, by the control device 26, the first energy radiation system 23 and/or the second energy radiation system 24 to perform selective curing is based on the position data of the three-dimensional model printed on the component platform 22 in the associated file package. If it shows that a cross-sectional layer of the three-dimensional object to be cured is located in the first calibration format or the second calibration format through analyzing the position data, only the first energy radiation system 23 or the second energy radiation system 24 is controlled to perform selective curing; and if it shows that the cross-sectional layer of the three-dimensional object to be cured is across the overlapping area between the first calibration format and the second calibration format, the first energy radiation system 23 and the second energy radiation system 24 are controlled to selectively cure the corresponding layer by using splicing technology.

In some embodiments, in order to print a three-dimensional object by a single energy radiation system as so as possible, the associated file package also includes integrity of a three-dimensional model, which may describe integrity of a projection range of the whole three-dimensional model in the first calibration formate and the second calibration format; and may also describe integrity of a projection range of each layer of the three-dimensional model in the first calibration formate and the second calibration format. For example, according to the description of the integrity, if the projection range of the three-dimensional model covers the overlapping area between the first calibration format and the second calibration format, but still entirely falls into the first calibration format, the control device 26 controls the first energy radiation system 23 independently to manufacture the corresponding three-dimensional object at a corresponding position of the component platform 22.

The control device 26 can be configured with a data processing apparatus 27. The data processing apparatus 27 includes the aforementioned data processing system, so as to place the three-dimensional model in the corresponding first calibration format or second calibration format. The data processing apparatus 27 includes a storage unit and a processing unit. The storage unit stores at least one three-dimensional model and a data processing program. When the program is executed, any one or a combination of the foregoing data processing methods is executed to place the three-dimensional model in the first calibration format or the second calibration format. The three-dimensional model placed in the overlapping area of one calibration format is also considered to be placed in one of the calibration formats. The program includes an associated file package that is used for processing the three-dimensional model so that it can be processed by the control device 26 and printed by the first energy radiation system 23, the second energy radiation system 24 and the Z-axis drive mechanism 25 cooperatively. The data processing apparatus 27 stores the generated associated file package in a storage unit, such as a built-in hard disk, a USB flash disk, or a mobile hard disk. A technical person can import the associated file package into the control device 26. The control device 26 can also read the associated file package directly via a data interface, a network interface or a wireless network.

The present application further provides a 3D printing method for a 3D printing apparatus including at least a first energy radiation system and a second energy radiation system. The first energy radiation system is pre-calibrated with a first calibration format, and the second energy radiation system is pre-calibrated with a second calibration format. The first calibration format is overlapped with the second calibration format, wherein the overlapped may be an intersection line or an intersection surface (collectively referred to as an overlapping area). The sizes of the first calibration format and the second calibration format may be equal to or different with each other. For example, the area of the first calibration format is m1 × m2, and the area of the second calibration format is m3 × m2, where m1 ≦ m3. Each of the calibration formats may be a regular shape such as a circle, an ellipse, a triangle, a rectangle, or a polygon, and may also be an irregular shape. For example, a portion of boundary line that forms the boundary line of the overlapping area of the calibration format is a curve with a curvature, and a portion of boundary line that does not form the boundary line of the overlapping area is a curve with another curvature. The two curves are connected end to end to form a closed calibration format.

Please refer to Fig. 11, which shows a flow diagram of a 3D printing method for the 3D printing apparatus in an embodiment.

As shown in Fig. 11, in step S410, an associated file package for describing printing information of a three-dimensional model is acquired. Here, the associated file package can be imported manually by a technical person or downloaded through a network. The printing information includes all data and information that can be parsed in the associated file package. The associated file package is not necessarily obtained based on the foregoing data processing method. When it is determined through parsing that position data in the acquired associated file package indicates the described three-dimensional model is located in the first calibration format or the second calibration format, it is determined to use the corresponding energy radiation system to perform curing based on data of the slicing pattern of each layer. When it is determined through parsing that the acquired associated file package contains integrity, according to the description of the integrity, one energy radiation system is selected to perform curing based on the data of the slicing pattern of each layer, or the first energy radiation system and second energy radiation system are controlled to perform curing in splicing manner based on the data of the slicing pattern of each layer. When it is determined through parsing that position data in the acquired associated file package indicates that the described three-dimensional model is located at the overlapping area between the first calibration format and the second calibration format, or the described three-dimensional model overlaps with any of three-dimensional models that placed in any of the two calibration formats, step S420 is performed.

In step S420, the position data in the associated file package is adjusted to place the described three-dimensional model in the first calibration format or the second calibration format. For example, the position data includes coordinate of a reference point and an offset of each layer relative to the coordinate of the reference point. The projection range of the described three-dimensional model is determined based on the coordinate of the reference point and the offset, and the coordinate of the reference point is adjusted such that the projection range is located in the first calibration format or the second calibration format. The three-dimensional model placed in the overlapping area of one calibration format is also considered to be placed in one of the calibration formats.

In step S430, a three-dimensional object corresponding to the three-dimensional model is manufactured in the first calibration format or the second calibration format according to the adjusted associated file package.

Here, the 3D printing apparatus controls, according to the calibration format corresponding to the associated file package, the first energy radiation system or the second energy radiation system to cure a material in the corresponding calibration format based on data of a first layer slicing pattern, so that the material is cured into a corresponding patterned cured layer; and the 3D printing apparatus controls, according to a layer height, a component platform to adjust height to refill the material between the patterned cured layer attached thereto and the reference printing surface. The layer curing and height adjustment are repeated to perform curing based on the data of the slicing pattern of each layer to form a corresponding patterned cured layer, thereby manufacture the corresponding three-dimensional object by accumulating each patterned cured layer.

For step S420, in some embodiments, the 3D printing apparatus includes a display screen, on which a format after the first calibration format and the second calibration format are merged is displayed. The 3D printing apparatus places and displays the corresponding three-dimensional model at an initial position, or an unoccupied position, or a manually adjusted position within the first calibration format and the second calibration format according to the position data in the associated file package. When the placement position of the three-dimensional model needs to be moved, step S420 is performed specifically by step S421 (not shown); otherwise, step S430 is performed.

In step S421, it is prompted that the described three-dimensional model is located at the overlapping area between the first calibration format and the second calibration format. For example, the 3D printing apparatus as shown in Fig. 2 detects the position data of the imported associated file package, and determines whether the projection range of the described three-dimensional model M1 is across the overlapping area enclosed by overlapping information. If so, the projection range or the overlapping area is highlighted. If not, such a highlight prompt is absent. Here, the highlight prompt manner is only an example, but not a limitation on the present application.

In the case that a plurality of associated file packages are acquired, the 3D printing apparatus detects the position data of each associated file package to determine the placement position of the described three-dimensional model in the calibration format, and provide a corresponding prompt when one or some three-dimensional models cross the overlapping area. The technical person adjusts the position data in a part of the associated file packages according to the prompt to place a part of the three-dimensional models in the first calibration format in their entirety and place another part of the three-dimensional models in the second calibration format in their entirety. Thus, splicing technology is not needed for manufacturing a three-dimensional object. The technical person can keep an associated file package that cannot be entirely placed in the first calibration format or the second calibration format in the overlapping area or remove it.

It should be noted that the technical person can change the position data in the corresponding associated file package through adjusting the placement position of the three-dimensional model based on a system prompt. Step S430 is performed after the adjustment is completed.

In some other embodiments, the 3D printing apparatus determines and adjusts the placement position of the acquired three-dimensional model by itself. In other words, step S420 is performed specifically by step S422: the position data in a part of the associated file packages is adjusted to place a part of the three-dimensional models in the first calibration format in their entirely and place another part of the three-dimensional models in the second calibration format in their entirely.

In an embodiment, based on a projection range obtained according to the position data in the associated file packages, and a vacant area in the first calibration format or the second calibration format, the 3D printing apparatus adjusts the position data in at least one associated file package to place the described three-dimensional model in the vacant area of the first calibration format or the second calibration format. A minimum range of the vacant area is consistent with the projection range of the three-dimensional model, or is consistent with an area that is covered by the projection range and a preset spacing together.

For example, the 3D printing apparatus parses the position data in each associated file package to determine the projection range of each three-dimensional model; and determines the vacant area in each calibration format, and places a three-dimensional model crossing the overlapping area in a vacant area larger than its projection range, that is, modifying the position data in a first associated file corresponding to the three-dimensional model crossing the overlapping area to a placement position corresponding to the vacant area. In the case that the three-dimensional model can be placed in both calibration formats, the 3D printing apparatus selects one vacant area randomly. Alternatively, based on the position of the vacant area in the corresponding calibration format, the 3D printing apparatus places the three-dimensional model in a position that is more conformable to other placement condition, such as at least one of: a vacant area closer to the center of the format, based on equalization of the number of three-dimensional models in each calibration format, based on the number of layers of each three-dimensional model, based on layered printing data describing each three-dimensional model, and the like. The 3D printing apparatus adjusts the position data in the related file package according to the placement position correspondingly.

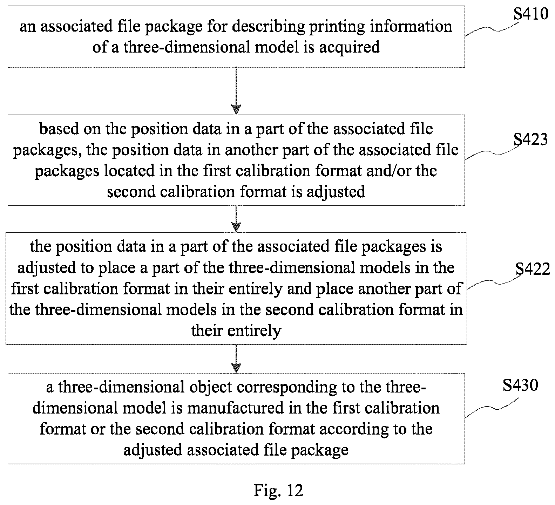

In another embodiment, when the associated file packages of the three-dimensional models are imported into the 3D printing apparatus in batches, step S423 is perfromed before step S422. Please refer to Fig. 12, which shows a flow diagram of a printing method in an embodiment.

In step S423, based on the position data in a part of the associated file packages, the position data in another part of the associated file packages located in the first calibration format and/or the second calibration format is adjusted.

To easy of description, an associated file package imported previously is called a first associated file package, and an associated file package imported subsequently is called a second associated file package. A three-dimensional model corresponding to the first associated file package is called a first three-dimensional model, and a three-dimensional model corresponding to the second associated file package is called a second three-dimensional model.

In some implementations, when determining that the projection range of the second three-dimensional model falls into at least one calibration format through parsing the position data of each associated file package, the 3D printing apparatus provides an adjustment prompt to the technical person, so that the technical person adjusts a placement position of the first three-dimensional model or the second two-dimensional model. For example, when the 3D printing apparatus parses the associated file package of the imported second three-dimensional model and places object in an initial position indicated by the position data and confirms the position data in the associated file package needs to be adjusted, the 3D printing apparatus compares the projection range of the second three-dimensional model with respective vacant area in the first calibration format or in the second calibration format, and if it is determined that the second three-dimensional model can be placed in the first calibration format, a prompt such as contour dashed line is used to prompt in the corresponding vacant area, so that the technical person places the imported second three-dimensional model at the prompted position and modifies the position data according to the adjustment of the technical person. If it is determined that the second three-dimensional model can be placed in the first calibration format and the second calibration format, a corresponding prompt is provided in each vacant area so that the technical person selects one of the prompted positions for placement.

The placement position prompted by the 3D printing apparatus is a placement position where the second three-dimensional model is translated to the vacant area, or is a placement position where the second three-dimensional model is rotated within the calibration format to the vacant area.

As another example, as shown in Figs. 5a and 5b, by analyzing the position data of the associated file packages of the first three-dimensional models M5 and M6, the 3D printing apparatus determines that the three-dimensional models M5 and M6 are placed in the first and second calibration formats, respectively. When the associated file package for describing the three-dimensional model M7 is received, by analyzing the position data in the associated file package, the three-dimensional models M5 and M7 are arranged adjacent to each other with the first spacing therebetween, and it is detected whether an overall projection range of M5 and M7 can be located within the first calibration format. If so, placement positions of the three-dimensional models M5 and M7 are adjusted. If not, the three-dimensional models M6 and M7 are arranged adjacent to each other with the first spacing therebetween, and it is detected whether an overall projection range of M6 and M7 can be located in the second calibration format. If so, placement positions of the three-dimensional models M6 and M7 are adjusted. If not, the three-dimensional models M5, M6, and M7 are placed with a spacing which is equal to or larger than the first spacing and as a whole within a format that is across the overlapping area between two calibration formats. When the three-dimensional model M7 cannot be placed in any calibration format but can be placed in an area that crosses the overlapping area, M7 is placed acorss the overlapping area directly to print the three-dimensional model M7 by splicing technology.

Here, to place the second three-dimensional model in the first calibration format or the second calibration format as so as possible, the placement position of the first three-dimensional model is adjusted by translating the placement position of the first three-dimensional model only, or rotating the first three-dimensional model within the calibration format only, or combination thereof.

It should be noted that the associated file package imported in each batch is not limited to a single one, and may also be a plurality of associated file packages. For a plurality of associated file packages imported in each batch, the foregoing steps S423 and S422 are performed repeately to correspond the imported associated file packages into the first calibration format or the second calibration format one by one.

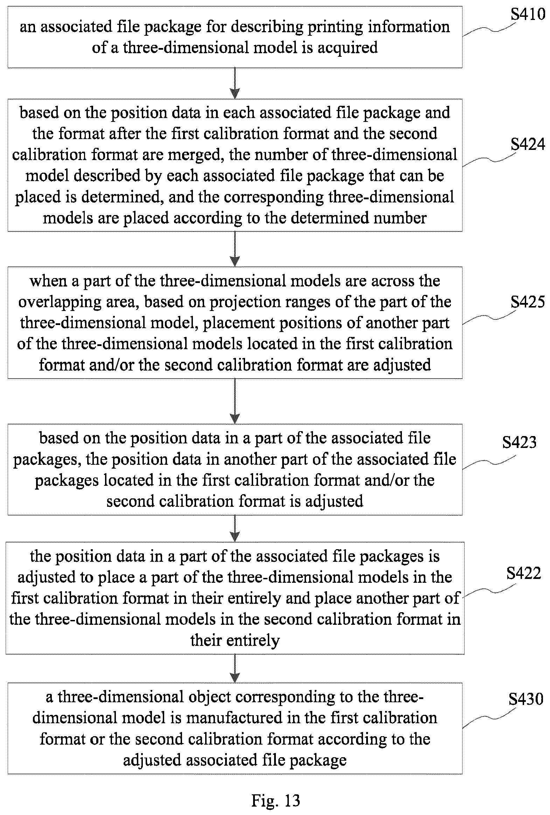

In yet another embodiment, in the case a plurality of associated file packages are imported at the same time, step S420 includes steps S424 and S425. Please refer to Fig. 13, which shows a flow diagram of the printing method in another embodiment.

As shown in Fig. 13, in step S424, based on the position data in each associated file package and the format after the first calibration format and the second calibration format are merged, the number of three-dimensional model described by each associated file package that can be placed is determined, and the corresponding three-dimensional models are placed according to the determined number.

In step S425, when a part of the three-dimensional models are across the overlapping area, based on projection ranges of the part of the three-dimensional model, placement positions of another part of the three-dimensional models located in the first calibration format and/or the second calibration format are adjusted.

For example, the 3D printing apparatus determines, based on the position data in each imported associated file package, an average projection range of each three-dimensional model, and determines the number N2 of the average projection range that can be accommodated in the first calibration format and the second calibration format together; if the number N1 of the three-dimensional models is smaller than N2, the three-dimensional models are evenly distributed within the ranges of the first calibration format and the second calibration format. When a three-dimensional model crosses the overlapping area between the two calibration formats, a corresponding prompt is provided, or spacings between other three-dimensional models are adjusted according to steps S423 and S422, so that the three-dimensional model crossing the overlapping area falls into one of the calibration formats, and position data in each associated file package is determined. If the number N1 of the three-dimensional models is larger than N2, it is prompted that not all three-dimensional models can be placed.

In still another embodiment, step S420 is performed specifically by step S426.

In step S426, the three-dimensional models placed in the first calibration format or the second calibration format are distributed based on the printing information in each associated file package. The printing information includes but is not limited to at least one of: position data, the number of layers, the number of pixel for describing the slicing pattern of each layer, the number of coordinate for describing the slicing pattern of each layer, the total number of all coordinates in the three-dimensional models, and the like.

Here, the 3D printing apparatus determines the combination of placements of at least part of the three-dimensional models through analyzing the printing information. The combination of placement includes but is not limited to: a combination of placing at least part of the three-dimensional models in one calibration format, and/or a combination of placing at least part of the three-dimensional models in different calibration formats.

For example, the 3D printing apparatus determines at least two three-dimensional models with the largest numbers of layers by analyzing the number of layers, and separately places the at least two three-dimensional models with the largest numbers of layers in the first calibration format or the second calibration format as a placement condition. The three-dimensional models to be placed separately in the first calibration format or the second calibration format are determined based on the placement condition.

As another example, the 3D printing apparatus performs different combinations on each three-dimensional model according to maximum placement ranges corresponding to the first calibration format and the second calibration format, respectively, and places each three-dimensional model in the first calibration format and/or the second calibration format respectively according to the different combinations. At the same time, it calculates time lengths required to print all three-dimensional models under the different combinations, respectively, and selects a combination corresponding to the shortest time length to place each three-dimensional model. The maximum placement range refers to the maximum number of three-dimensional models that can be placed only in the first calibration format or the second calibration format separately and without overlapping each other. For example, the 3D printing apparatus selects multiple combinations for each three-dimensional model according to the maximum placement range; and when the 3D printing apparatus includes a scanning curing type energy radiation systems, the 3D printing apparatus simulates a time length for printing in each calibration format according to the maximum number of layers and the total number of coordinates in the associated file packages corresponding to the first calibration format or the second calibration format in each combination, and then selects a combination with the shortest printing time length and adjusts position information in each associated file package.

The 3D printing apparatus adjusts the position data in the corresponding associated file package according to the three-dimensional model distributed in the first calibration format or the second calibration format.

It should be noted that when the 3D printing apparatus sets the combination of placement, the maximum number of three-dimensional models that can be placed in each calibration format is considered, and even a combination of the above-mentioned placement conditions is considered.

In some other embodiments, the 3D printing apparatus determines the position data in each associated file package in conjunction with the aforementioned various placement schemes before printing.

It should be noted that, due to the limitation of the projection range of the three-dimensional model and vacant area, during placement, for three-dimensional models which are belong to one batch and cannot be placed only in the first calibration format or the second calibration format, the three-dimensional model is selected to place in an area crossing the two calibration formats, so as to be printed by a 3D printing apparatus using splicing technology.

To determine the first energy radiation system and/or the second energy radiation system which is used to manufacture the three-dimensional object when step S430 is executed, the 3D printing method further includes a step of controlling the first energy radiation system or the second energy radiation system for selectively curing the corresponding three-dimensional object based on the integrity of the three-dimensional model described by the associated file package in the first calibration format and the second calibration format, respectively.

Here, as shown in Fig. 8, the 3D printing apparatus obtains the following through analyzing the position data in each associated file package: the three-dimensional model M1 is across the overlapping area between the first calibration format and the second calibration format, and its integrity is marked as P1; the three-dimensional model M2 is located in the first calibration format in its entirety, and its integrity is marked as P2; the three-dimensional model M3 is partially located in the overlapping area and is located in the second calibration format in its entirety, and its integrity is marked as P3; the three-dimensional model M4 is located in the overlapping area in its entirety, and its integrity is marked as P4. The integrity is marked according to a percentage of the three-dimensional model placed in the respective calibration format to the entrire three-dimensional model, or is marked when the three-dimensional model is located in the corresponding calibration format entirely. For example, P1 indicates a% in the first calibration format, b% in the second calibration format and (100-a-b)% in the overlapping area; P2 indicates 100% in the first calibration format and 0% in the second calibration format; P3 indicates 100% in the second calibration format and 0% in the first calibration format; and P4 indicates 100% in the first calibration format and 100% in the second calibration format.

The integrity may also be described by coordinate of projection contour point of the three-dimensional model in the first calibration format and/or the second calibration format reflected by the position data in the associated file package. For example, P1 includes coordinates of a plurality of contour points of a projection contour of the three-dimensional model M1 in the first calibration format and the second calibration format, wherein the coordinate of each contour point in the overlapping area is represented by coordinate in the first calibration format only, or by coordinate in the second calibration format only, or by two sets of coordinates which represnet a same projection contour point.

The integrity may also be described by position of each slicing pattern in the three-dimensional model reflected by the position data in the associated file package. Thus, the 3D printing apparatus also determines an energy radiation system used for the slicing pattern of each layer. For example, coordinate of contour point of the slicing pattern of each layer in the three-dimensional model M4 is represented by two sets of coordinates, wherein one set of coordinates corresponds to the first calibration format and the other set of coordinates corresponds to the second calibration format. Thus, the 3D printing apparatus selects one of the energy radiation systems to perform cure operation according to its selection strategy. As another example, the coordinate of the contour point of the slicing pattern of each layer in the three-dimensional model M4 is represented only by the coordinate in the first calibration format or in the second calibration format. Thus, the 3D printing apparatus selects a corresponding energy radiation system to perform cure operation according to the integrity.

The integrity may also be marked based on whether the three-dimensional model falls into one of the calibration formats entirely reflected by the position data in the associated file package, so that the 3D printing apparatus controls the corresponding energy radiation system based on the integrity mark. For example, the P1 is M1 needs to be printed by the first energy radiation system and the second energy radiation system in a splicing manner; the P2 mark is M2 is located in the first calibration format; the P3 mark is M3 is located in the second calibration format; and the P4 mark is M4 is located in the first calibration format with a smaller area.

It should be noted that the above integrity marks are merely examples and are not limitations on the present application. Those skilled in the art can combine or change the marking manners according to the above examples, which should be regarded as example variations based on the technical idea of the present application. For example, the integrity is marked based on whether the contour of the slicing pattern of each layer entirely falls into one of the calibration formats, and thus the 3D printing apparatus determines an energy radiation system to be used according to the integrity of each layer, so that one cured layer can be selectively cured by one energy radiation system independently as so as possible.

The 3D printing apparatus determines to use the first energy radiation system and/or the second energy radiation system to execute step S430 according to the integrity.

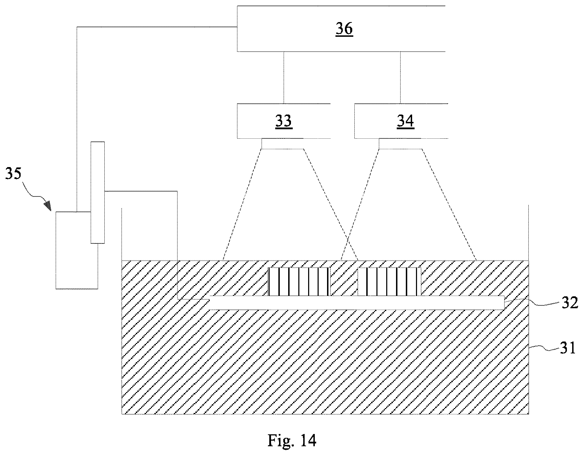

In addition, the present application further provides a 3D printing apparatus. The 3D printing apparatus includes a container, a first energy radiation system, a second energy radiation system, a component platform, a Z-axis drive mechanism and a control device. Please refer to Fig. 14, which shows a structure diagram of the 3D printing apparatus of the present application in another embodiment.

As shown in Fig. 14, the container 31 is used for containing a photocurable material. The photocurable material includes any liquid material or powder material that is easily photocurable. For example, the liquid material includes a photocurable resin liquid or a resin liquid doped with a mixed material of ceramic powder, a color additive and the like. The powder material includes but is not limited to ceramic powder, color added powder, and the like. For a 3D printing apparatus based on bottom exposure, the container 31 used therefor is shallow and has a transparent bottom surface. The transparent bottom surface is a reference printing surface on which the first energy radiation system 33 and the second energy radiation system 34 project a pixel image or scan a light spot path. For a 3D printing apparatus based on top exposure, the container 31 used therefor is relatively deeper, and the surface of the material contained or laid therein is a reference printing surface on which the first energy radiation system 33 and the second energy radiation system 34 project a pixel image or scan a light spot path.

The first energy radiation system 33 is used for selectively curing a material within the first calibration format according to the received data of a slicing pattern.

The second energy radiation system 34 is used for selectively curing a material within the second calibration format according to the received data of a slicing pattern. The first calibration format is overlapped with the second calibration format. The sizes of the first calibration format and the second calibration format may be equal to or different with each other. For example, the area of the first calibration format is m1 × m2, and the area of the second calibration format is m3 × m2, where m1 ≦ m3. Each of the calibration formats may be a regular shape such as a circle, an ellipse, a triangle, a rectangle, or a polygon, and may also be an irregular shape. For example, a portion of boundary line of the calibration format that forms the boundary line of the overlapping area is a curve with a curvature, and a portion of boundary line that does not form the boundary line of the overlapping area is a curve with another curvature. The two curves are connected end to end to form a closed calibration format. The material can be regarded as a material layer which is laid with the aforementioned powder or liquid, and is to be photo-cured or to be sintered and which has a certain thickness.

As radiation principles of the first and second energy radiation systems (33, 34) are different, the data of the slicing pattern received thereby is also different. Generally, the first and second energy radiation systems (33, 34) are configured as the same type of energy radiation system. For example, both energy radiation systems include: an energy beam emitting device for performing selective curing in a scanning manner. The energy beam emitting device for performing selective curing in a scanning manner includes a laser emitter or an electromagnetic wave emitter, a lens group located on an outgoing path of one of the emitters, and a galvanometer group located on a light outgoing side of the lens group (both are not shown). The laser emitter or the electromagnetic wave emitter adjusts energy of an output laser beam or electromagnetic beam in a controlled manner. For example, the laser emitter is controlled to emit a laser beam with a predetermined power and to stop emitting the laser beam. As another example, the laser emitter is controlled to increase the power of a laser beam and to reduce the power of a laser beam. The lens group is used to adjust a focus position of laser beam. The galvanometer group is used to scan with a laser beam in a two-dimensional space of the reference printing surface in a controlled manner, and the photocurable material scanned with the light beam is cured into a corresponding patterned cured layer. The energy beam emitting device for performing selective curing in a scanning manner further includes an electron beam emitter, an electron beam scanner, and the like. Controlled by the electron beam scanner, electron beam scans in a corresponding calibration plane to selectively cure metal powder and obtain a cured layer corresponding to the slicing pattern.

Alternatively, both energy radiation systems include a projection device for performing selective curing in a surface exposure manner. For example, the projection device includes a DMD chip, a controller and a storage module. The storage module stores a slicing pattern obtained after a 3D component model is layered. Switches for each pixel point on a layered image are used to selectively cure the material layer in the corresponding calibration format. The DMD chip looks like a small mirror in appearance, and is packaged in a closed space formed by metal and glass. In fact, this mirror is composed of hundreds of thousands or even millions of micromirrors, each micromirroe represents a pixel, and the projected image is composed of these pixels. The DMD chip can be simply described as micromirror and semiconductor optical switch corresponding to the pixel point, and the controller allows/prohibits light reflection by each micromirror through controlling each optical switch in the DMD chip, thereby selectively curing the material layer in the corresponding calibration format according to pixel data of the corresponding slicing pattern, so that the corresponding material layer is patterned cured.

To ensure the two energy radiation systems coordinately print a three-dimensional object with a larger format, there are overlapping area in the calibration formats of the two energy radiation systems. Also, manufacturing efficiency for printing small-format three-dimensional objects in batches can be improved by using multiple energy radiation systems.

The component platform 32 is used for attaching a patterned cured layer obtained through being selectively cured by the first energy radiation system 33 and/or the second energy radiation system 34. Here, the component platform 32 includes one or more component boards, which accumulatively attaches the patterned cured layer. In the case that the component platform 32 includes one component board, the area of the component board is greater than or equal to the area of a format formed after the first calibration format and the second calibration format are merged. In the case that the component platform 32 includes a plurality of component boards, the component boards are spliced together and attach the cured layer being cured by the first energy radiation system 33 and the second energy radiation system 34.

The Z-axis drive mechanism 35 is connected with the component platform 32, and is used for moving along a vertical axial direction in a controlled manner to adjust a spacing between the component platform 32 and the reference printing surface. In a 3D printing apparatus based on bottom exposure, when the Z-axis drive mechanism 35 drives the component platform 32 to descend, it is usually to lower the component platform 32 or the patterned cured layer attached to the component platform 32 to a position spaced from the bottom of the container 31 by a layer height of the cured layer, so as to selectively cure the material filled in the spacing. When the Z-axis drive mechanism 35 drives the component platform 32 to ascend, it is usually to separate the patterned cured layer from the bottom of the container 31. In a 3D printing apparatus based on top exposure, the Z-axis drive mechanism 35 drives the component platform 32 to descend for a layer height of the cured layer, so that the material in the container 31 or an external material fills the spacing caused by the descending.

The control device 36 is connected with the first energy radiation system 33 and the second energy radiation system 34, and is used for controlling the first energy radiation system 33 and the second energy radiation system 34 to selectively cure a three-dimensional model placed in the corresponding calibration format.

Here, the control device 36 includes a storage unit, a processing unit, an interface unit and the like. The storage unit includes a non-volatile memory and a volatile memory. The non-volatile memory is, for example, a solid state hard disk or a USB flash disk, etc. The volatile memory includes an memory or a register.

The processing unit includes at least one of a CPU or a chip integrated with a CPU, a programmable logic device (FPGA), and a multi-core processor. The processing unit is connected with the storage unit via a system bus, reads data stored in the storage unit and writes data to the storage unit. The read data includes an associated file package read from the non-volatile memory, and previously written temporary data read from the volatile memory, and is used for controlling the first energy radiation system 33 and/or the second energy radiation system 34 to selectively cure the material layer according to data of the slicing pattern of each layer in the associated file package. The written data includes: the above-mentioned associated file package received via the interface unit, and data temporarily stored during program execution. For example, the processing unit provides a corresponding pixel image to the projection device, and the projection device controls the DMD chip according to a pixel position in the image to selectively cure the material layer based on the corresponding pixel image . As another example, the processing unit provides corresponding coordinate data to the first energy radiation system 33 and/or the second energy radiation system 34, and a controller in each energy radiation system controls an output power of each laser generator, and controls a rotation angle of each galvanometer, so as to scan the material layer along a path formed by corresponding coordinates.

The interface unit includes a plurality of interface ports, which are respectively connected with a device that is packaged independently in the 3D printing apparatus and transmits data via interface such as the first energy radiation system 33, the second energy radiation system 34, the Z-axis drive mechanism 35. The device further includes at least one of a prompt device, a human-machine interaction device, and the like.

The storage unit also stores a program for coordinating the Z-axis drive mechanism 35 to work cooperatively with the first energy radiation system 33 and the second energy radiation system 34 to manufacture a three-dimensional object. The processing unit first invokes and executes the program to control the Z-axis drive mechanism 35 in sequence to adjust a spacing between the component platform 32 and the reference printing surface, and to control the first energy radiation system 33 and/or the second energy radiation system 34 to perform selective curing mentioned above. Taking a top-exposure 3D printing apparatus as an example, the processing unit instructs the Z-axis drive mechanism 35 to descend by a cured layer spacing according to curing completion information fed back by each energy radiation system, and the Z-axis drive mechanism 35 executes the instruction according to the cured layer spacing described in the associated file package.

Controlling, by the control device 36, the first energy radiation system 33 and/or the second energy radiation system 34 to perform selective curing operation is based on the position data of the three-dimensional model printed on the component platform 32 in the associated file package. If it shows that a cross-sectional layer of the three-dimensional object to be cured is located in the first calibration format or the second calibration format through analyzing the position data, only the first energy radiation system 33 or the second energy radiation system 34 is controlled to perform selective curing operation; and if it shows that the cross-sectional layer of the three-dimensional object to be cured is across the overlapping area between the first calibration format and the second calibration format, the first energy radiation system 33 and the second energy radiation system 34 are controlled to perform selective curing operation on the same layer by using splicing technology. In the case of manufacturing a three-dimensional object in the overlapping area corresponding to one calibration format in the component platform 32, one energy radiation system is used to performe selective curing operation.

In some implementations, in order to print a three-dimensional object by a single energy radiation system as so as possible, the associated file package also includes integrity of a three-dimensional model, which may describe integrity of a projection range of the whole three-dimensional model in the first calibration formate and the second calibration format; and may also describe integrity of a projection range of each layer of the three-dimensional model in the first calibration formate and the second calibration format. For example, according to the description of the integrity, if the projection range of the three-dimensional model covers the overlapping area between the first calibration format and the second calibration format, but still entirely falls into the first calibration format, the control device 36 controls the first energy radiation system 33 independently to manufacture the corresponding three-dimensional object at a corresponding position of the component platform 32.

The control device 36 can also invoke and execute a printing program stored in the storage unit to coordinate the first energy radiation system 33, the second energy radiation system 34 and the Z-axis drive mechanism 35 to print a three-dimensional object in its entirety by one energy radiation system as so as possible. The control device 36 performs the operation processes described by one or more combinations of the foregoing 3D printing methods through executing the printing program.

It should also be noted that, through the description of the above implementations, those skilled in the art can clearly understand that part or all of the present application can be realized by means of software and in combination with necessary general-purpose hardware platforms. Based on this understanding, the technical solutions of the present application essentially or the part contributing to the prior art can be embodied in the form of a software product, the computer software product can include one or more machine readable media which store machine executable instructions thereon, when these instructions are executed by one or more machines such as a computer, a computer network or other electronic apparatus, such one or more machines can execute operations based on the embodiments of the present application. The machine readable media include but are not limited to, a floppy disk, an optical disk, a CD-ROM (a compact disc-read only memory), a magnetic optical disc, an ROM (read-only memory), an RAM (random access memory), an EPROM (erasable programmable read-only memory), an EEPROM (electrically erasable programmable read-only memory), a magnetic card or optical card, a flash memory or other types of media/machine readable media which are applicable to storing machine executable instructions. For example, the aforementioned print program stored in the control device and the data processing program stored in the data processing device are both stored in a storage server provided by the service mall via a storage medium. Examples of the service mall are: APP mall, software download website, and the like. The storage server may be a single server, a distributed service cluster, a cloud-based server, or the like.

The application can be used in numerous general-purpose or special-purpose calculating system environments or configurations, for example, personal computer, server computer, handheld device or portable device, tablet device, multiprocessor system, microprocessor based system, set top box, programmable consumer electronic device, network PC, small-size computer, large-scale computer, and a distributed computing environment containing any of the above system or device.

The present application can be described in the general context of the computer executable instructions executed by the computer, such as a program module. Generally, the program module includes routines, programs, objects, components, data structures and the like which execute particular tasks or realize particular abstract data types. The present application can also be practiced in the distributed computing environments. In these distributed computing environments, tasks are executed by remote processing devices which are connected via a communication network. In the distributed computing environments, the program module can be located in a local and remote computer storage medium including a storage device.

While the present application has been shown and described by preferred embodiments herein, it will be obvious to those skilled in the art that such embodiments are provided by way of example only, and are not intended to limit the application.

## Claims

1. A 3D printing method, comprising:
acquiring at least one associated file package to manufacture a plurality of three-dimensional objects in batches (S410), the at least one associated file package is used for describing printing information of at least one three-dimensional model, wherein, entire projection ranges of at least part of three-dimensional models are located in the first calibration format or the second calibration format, wherein, the first calibration format refers to format data obtained by pre-calibrating a first energy radiation system (23), and the second calibration format refers to format data obtained by pre-calibrating a second energy radiation system (24);
parsing each associated file package, and when determing that at least part of the associated file packages contain integrity, determing that a three-dimensional object corresponding to each three-dimensional model described by a corresponding associated file package is placed entirely in the first calibration format or in the second calibration format; when determing that at least part of the associated file packages do not contain integrity, adjusting position data in a corresponding associated file package to place a three-dimensional object corresponding to the described three-dimensional model in the first calibration format entirely or in the second calibration format entirely (S420); wherein the first calibration format is overlapped partially with the second calibration format, the first calibration format is selectively cured by the first energy radiation system (23), and the second calibration format is selectively cured by the second energy radiation system (24); the integrity relates to whether the three-dimensional model falls entirely within the first calibration format or falls entirely within the second calibration format;
controlling the first energy radiation system (23) to selectively cure a three-dimensional model placed in the first calibration format and/or controlling the second energy radiation system (24) to selectively cure a three-dimensional model placed in the second calibration format when determining a position of each three-dimensional object to be manufactured.

2. The 3D printing method of Claim 1, wherein, adjusting position data in a corresponding associated file package which does not contain integrity to place a part of the three-dimensional models in the first calibration format in their entirety and place another part of the three-dimensional models in the second calibration format in their entirety (S422).

3. The 3D printing method of Claim 2, further comprising a step of performing a combination of placement on each three-dimensional model to be printed based on printing information in each associated file package.

4. The 3D printing method of Claim 2 or 3, wherein, the step of adjusting position data in a corresponding associated file package which does not contain integrity comprises: adjusting position data in at least one associated file package to place the described three-dimensional model entirely in a vacant area in the first calibration format or in the second calibration format according to projection ranges obtained based on position data in the associated file packages, and the vacant area in the first calibration format or in the second calibration format.

5. The 3D printing method of Claim 4, wherein, before the step of adjusting position data in at least one associated file package, the method further comprises a step of adjusting position data in another part of the associated file packages placed in the first calibration format and/or the second calibration format based on position data in a corresponding associated file package which contains integrity (S423).

6. A 3D printing apparatus, comprising:
a first energy radiation system (23), configured to selectively cure a material layer within a first calibration format according to the received data of a slicing pattern, wherein, the first calibration format refers to format data obtained by pre-calibrating the first energy radiation system (23);
a second energy radiation system (24), configured to selectively cure a material layer within a second calibration format according to the received data of a slicing pattern, wherein, the second calibration format refers to format data obtained by pre-calibrating the second energy radiation system (24), the first calibration format is overlapped partially with the second calibration format;
a component platform (22), configured to attach a patterned cured layer selectively cured by the first energy radiation system (23) or/and the second energy radiation system (24);
a control device (26), connected with the first energy radiation system (23) and the second energy radiation system (24), and configured to selectively cure a three-dimensional model by performing a printing method of any one of claims 1-5.

7. The 3D printing apparatus according to claim 6, further comprising a Z-axis drive mechanism (25) connected with the component platform (22), wherein the control device (26) is further configured to control the Z-axis drive mechanism (25) to adjust a spacing between the component platform (22) and a reference printing surface.

8. The 3D printing apparatus according to any of claims 6-7, wherein, any one of the first energy radiation system (23) and the second energy radiation system (24) comprises: a projection device for selectively curing in a surface-exposure manner or an energy beam emitting device for selectively curing in a scanning manner.

9. A computer readable storage medium, which stores a first calibration format of a first energy radiation system (23) in a 3D printing apparatus and a second calibration format of a second energy radiation system (24) in the 3D printing apparatus, an associated file package for describing printing information of a three-dimensional model, and a program for adjusting a placement position of the three-dimensional model in the associated file package, wherein the first calibration format refers to format data obtained by pre-calibrating a first energy radiation system (23), and the second calibration format refers to format data obtained by pre-calibrating a second energy radiation system (24), the first calibration format is overlapped partially with the second calibration format; and a printing method of any one of claims 1-5 is performed when the program is executed by a control device of an apparatus according to claim 6.

## Patentansprüche

1. 3D-Druckverfahren, umfassend:
Erfassen wenigstens eines zugeordneten Dateipakets, um eine Mehrzahl von dreidimensionalen Objekten in Chargen (S410) herzustellen, wobei das wenigstens eine zugeordnete Dateipaket zum Beschreiben von Druckinformationen von wenigstens einem dreidimensionalen Modell verwendet wird, wobei gesamte Projektionsbereiche von wenigstens einem Teil von dreidimensionalen Modellen in dem ersten Kalibrierungsformat oder in dem zweiten Kalibrierungsformat lokalisiert sind, wobei sich das erste Kalibrierungsformat auf Formatdaten bezieht, erhalten durch Vorkalibrieren eines ersten Energiestrahlungssystems (23), und sich das zweite Kalibrierungsformat auf Formatdaten bezieht, erhalten durch Vorkalibrieren eines zweiten Energiestrahlungssystems (24);
Parsing von jedem zugeordneten Dateipaket, und, bei Bestimmen, dass wenigstens ein Teil der zugeordneten Dateipakete Integrität enthält, Bestimmen, dass ein dreidimensionales Objekt, welches jedem dreidimensionalen Model, beschrieben durch ein entsprechendes zugeordnetes Dateipaket, entspricht, vollständig in das erste Kalibrierungsformat oder in das zweite Kalibrierungsformat platziert ist; bei Bestimmen, dass wenigstens ein Teil der zugeordneten Dateipakete keine Integrität enthält, Anpassen von Positionsdaten in einem entsprechenden zugeordneten Dateipaket, um ein dreidimensionales Objekt, welches dem beschriebenen dreidimensionalen Modell entspricht, vollständig in dem ersten Kalibrierungsformat oder vollständig in dem zweiten Kalibrierungsformat (S420) zu platzieren; wobei das erste Kalibrierungsformat teilweise mit dem zweiten Kalibrierungsformat überlappt, wobei das erste Kalibrierungsformat selektiv durch das erste Energiestrahlungssystem (23) gehärtet wird und das zweite Kalibrierungsformat selektiv durch das zweite Energiestrahlungssystem (24) gehärtet wird; wobei sich die Integrität darauf bezieht, ob das dreidimensionale Modell vollständig in das erste Kalibrierungsformat fällt oder vollständig in das zweite Kalibrierungsformat fällt;
Steuern des ersten Energiestrahlungssystems (23), um ein dreidimensionales Modell selektiv zu härten, welches in dem Kalibrierungsformat platziert ist und/oder Steuern des zweiten Energiestrahlungssystems (24), um ein dreidimensionales Modell selektiv zu härten, welches in dem zweiten Kalibrierungsformat platziert ist, wenn eine Position von jedem herzustellenden dreidimensionalen Objekt bestimmt wird.

2. 3D-Druckverfahren nach Anspruch 1, wobei Positionsdaten in einem entsprechenden zugeordneten Dateipaket, welches keine Integrität enthält, angepasst werden, um einen Teil des dreidimensionalen Models vollständig in dem ersten Kalibrierungsformat zu platzieren und einen anderen Teil des dreidimensionalen Modells vollständig in dem zweiten Kalibrierungsformat (S422) zu platzieren.

3. 3D-Druckverfahren nach Anspruch 2, ferner umfassend einen Schritt des Durchführens einer Kombination einer Platzierung auf jedem zu druckenden dreidimensionalen Modell, basierend auf Druckinformationen in jedem zugeordneten Dateipaket.

4. 3D-Druckverfahren nach Anspruch 2 oder 3, wobei der Schritt des Anpassens von Positionsdaten in einem entsprechenden zugeordneten Dateipaket, welches keine Integrität enthält, umfasst: Anpassen von Positionsdaten in wenigstens einem zugeordneten Dateipaket, um das beschriebene dreidimensionale Modell vollständig in einem vakanten Bereich in dem ersten Kalibrierungsformat oder in dem zweiten Kalibrierungsformat zu platzieren, entsprechend der Projektionsbereiche, erhalten auf Basis von Positionsdaten in den zugeordneten Dateipaketen, und dem vakanten Bereich in dem ersten Kalibrierungsformat oder in dem zweiten Kalibrierungsformat.

5. 3D-Druckverfahren nach Anspruch 4, wobei, vor dem Schritt des Anpassens von Positionsdaten in wenigstens einem zugeordneten Dateipaket, das Verfahren ferner einen Schritt des Anpassens von Positionsdaten in einem anderen Teil der zugeordneten Dateipakete, platziert in dem ersten Kalibrierungsformat und/oder dem zweiten Kalibrierungsformat, basierend auf Positionsdaten in einem entsprechenden zugeordneten Dateipaket, welches Integrität enthält (S423), umfasst.

6. 3D-Druck Apparat, umfassend:
ein erstes Energiestrahlungssystem (23), dazu eingerichtet, eine Materialschicht innerhalb eines ersten Kalibrierungsformats selektiv zu härten, gemäß der erhaltenen Daten eines Slicing-Musters, wobei sich das erste Kalibrierungsformat auf Formatdaten bezieht, erhalten durch Vorkalibrieren des ersten Energiestrahlungssystems (23);
ein zweites Energiestrahlungssystem (24), dazu eingerichtet, eine Materialschicht innerhalb eines zweiten Kalibrierungsformats selektiv zu härten, gemäß der erhaltenen Daten eines Slicing-Musters, wobei sich das zweite Kalibrierungsformat auf Formatdaten bezieht, erhalten durch Vorkalibrieren des zweiten Energiestrahlungssystems (24), wobei das erste Kalibrierungsformat teilweise mit dem zweiten Kalibrierungsformat überlappt;
eine Komponentenplattform (22), dazu eingerichtet, eine gemusterte, gehärtete Schicht, welche selektiv durch das erste Energiestrahlungssystem (23) und/oder das zweite Energiestrahlungssystem (24) gehärtet ist, anzubringen;
eine Steuervorrichtung (26), welche mit dem ersten Energiestrahlungssystem (23) und dem zweiten Energiestrahlungssystem (24) verbunden ist und dazu eingerichtet ist, ein dreidimensionales Modell durch Durchführen eines Druckverfahrens nach einem der Ansprüche 1-5 selektiv zu härten.

7. 3D-Druck Apparat nach Anspruch 6, ferner umfassend einen Fahrmechanismus in Z-Achse (25), welcher mit der Komponentenplattform (22) verbunden ist, wobei die Steuervorrichtung (26) ferner dazu eingerichtet ist, den Fahrmechanismus in Z-Achse (25) zu steuern, um einen Abstand zwischen der Komponentenplattform (22) und einer Referenz-Druckoberfläche anzupassen.

8. 3D-Druck Apparat nach einem der Ansprüche 6-7, wobei ein beliebiges des ersten Energiestrahlungssystems (23) und des zweiten Energiestrahlungssystems (24) umfasst: eine Projektionsvorrichtung zum selektiven Härten in einer oberflächenexponierten Weise oder eine Vorrichtung, welche einen Energiestrahl aussendet, zum selektiven Härten in einer scannenden Weise.

9. Computerlesbares Speichermedium, welches ein erstes Kalibrierungsformat eines ersten Energiestrahlungssystems (23) in einem 3D-Druck Apparat und ein zweites Kalibrierungsformat eines zweiten Energiestrahlungssystems (24) in dem 3D-Druck Apparat, ein zugeordnetes Dateipaket zum Beschreiben von Druckinformationen eines dreidimensionalen Modells, und ein Programm zum Anpassen einer Platzierungsposition des dreidimensionalen Modells in dem zugeordneten Dateipaket speichert, wobei sich das erste Kalibrierungsformat auf Formatdaten, erhalten durch Vorkalibrieren eines ersten Energiestrahlungssystems (23), bezieht, und sich das zweite Kalibrierungsformat auf Formatdaten, erhalten durch Vorkalibrieren eines zweiten Energiestrahlungssystems (24), bezieht, wobei das erste Kalibrierungsformat teilweise mit dem zweiten Kalibrierungsformat überlappt; und wobei ein Druckverfahren nach einem der Ansprüche 1-5 durchgeführt wird, wenn das Programm durch eine Steuervorrichtung eines Apparats nach Anspruch 6 ausgeführt wird.

## Revendications

1. Procédé d'impression 3D, comprenant :
l'acquisition d'au moins un paquet de fichiers associé pour fabriquer une pluralité d'objets tridimensionnels par lots (S410), l'au moins un paquet de fichiers associé est utilisé pour décrire des informations d'impression d'au moins un modèle tridimensionnel, dans lequel, des plages de projection entières d'au moins une partie de modèles tridimensionnels se situent dans le premier format d'étalonnage ou le deuxième format d'étalonnage, dans lequel, le premier format d'étalonnage se rapporte à des données de format obtenues en pré-étalonnant un premier système de rayonnement d'énergie (23), et le deuxième format d'étalonnage se rapporte à des données de format obtenues en pré-étalonnant un deuxième système de rayonnement d'énergie (24) ;
l'analyse de chaque paquet de fichiers associé, et lors de la détermination qu'au moins une partie des paquets de fichiers associés contiennent une intégrité, la détermination qu'un objet tridimensionnel correspondant à chaque modèle tridimensionnel décrit par un paquet de fichiers associé correspondant est placé entièrement dans le premier format d'étalonnage ou dans le deuxième format d'étalonnage ; lors de la détermination qu'au moins une partie des paquets de fichiers associés ne contiennent pas une intégrité, l'ajustement de données de position dans un paquet de fichiers associé correspondant pour placer un objet tridimensionnel correspondant au modèle tridimensionnel décrit dans le premier format d'étalonnage entièrement ou dans le deuxième format d'étalonnage entièrement (S420) ; dans lequel le premier format d'étalonnage chevauche partiellement le deuxième format d'étalonnage, le premier format d'étalonnage est sélectivement durci par le premier système de rayonnement d'énergie (23), et le deuxième format d'étalonnage est sélectivement durci par le deuxième système de rayonnement d'énergie (24) ;
l'intégrité se rapporte à si le modèle tridimensionnel tombe entièrement dans le premier format d'étalonnage ou tombe entièrement dans le deuxième format d'étalonnage ;
la commande du premier système de rayonnement d'énergie (23) pour durcir sélectivement un modèle tridimensionnel placé dans le premier format d'étalonnage et/ou la commande du deuxième système de rayonnement d'énergie (24) pour durcir sélectivement un modèle tridimensionnel placé dans le deuxième format d'étalonnage lors de la détermination d'une position de chaque objet tridimensionnel à fabriquer.

2. Procédé d'impression 3D selon la revendication 1, comprenant l'ajustement de données de position dans un paquet de fichiers associé correspondant qui ne contient pas d'intégrité pour placer une partie des modèles tridimensionnels dans le premier format d'étalonnage dans leur totalité et placer une autre partie des modèles tridimensionnels dans le deuxième format d'étalonnage dans leur totalité (S422).

3. Procédé d'impression 3D selon la revendication 2, comprenant en outre une étape de réalisation d'une combinaison de placement sur chaque modèle tridimensionnel à imprimer sur la base d'informations d'impression dans chaque paquet de fichiers associé.

4. Procédé d'impression 3D selon la revendication 2 ou 3, dans lequel, l'étape d'ajustement de données de position dans un paquet de fichiers associé correspondant qui ne contient pas d'intégrité comprend : l'ajustement de données de position dans au moins un paquet de fichiers associé pour placer le modèle tridimensionnel décrit entièrement dans une zone vacante dans le premier format d'étalonnage ou dans le deuxième format d'étalonnage selon des plages de projection obtenues sur la base de données de position dans les paquets de fichiers associés, et la zone vacante dans le premier format d'étalonnage ou dans le deuxième format d'étalonnage.

5. Procédé d'impression 3D selon la revendication 4, dans lequel, avant l'étape d'ajustement de données de position dans au moins un paquet de fichiers associé, le procédé comprend en outre une étape d'ajustement de données de position dans une autre partie des paquets de fichiers associés placés dans le premier format d'étalonnage et/ou le deuxième format d'étalonnage sur la base de données de position dans un paquet de fichiers associé correspondant qui contient une intégrité (S423).

6. Appareil d'impression 3D, comprenant :
un premier système de rayonnement d'énergie (23), configuré pour durcir sélectivement une couche de matériau dans un premier format d'étalonnage selon les données reçues d'un motif de tranchage, dans lequel, le premier format d'étalonnage se rapporte à des données de format obtenues en pré-étalonnant le premier système de rayonnement d'énergie (23) ;
un deuxième système de rayonnement d'énergie (24), configuré pour durcir sélectivement une couche de matériau dans un deuxième format d'étalonnage selon les données reçues d'un motif de tranchage, dans lequel, le deuxième format d'étalonnage se rapporte à des données de format obtenues en pré-étalonnant le deuxième système de rayonnement d'énergie (24), le premier format d'étalonnage chevauche partiellement le deuxième format d'étalonnage ;
une plateforme de composants (22), configurée pour fixer une couche durcie structurée sélectivement durcie par le premier système de rayonnement d'énergie (23) et/ou le deuxième système de rayonnement d'énergie (24) ;
un dispositif de commande (26), connecté au premier système de rayonnement d'énergie (23) et au deuxième système de rayonnement d'énergie (24), et configuré pour durcir sélectivement un modèle tridimensionnel en effectuant un procédé d'impression selon l'une quelconque des revendications 1 à 5.

7. Appareil d'impression 3D selon la revendication 6, comprenant en outre un mécanisme d'entraînement d'axe Z (25) connecté à la plateforme de composants (22), dans lequel le dispositif de commande (26) est en outre configuré pour commander le mécanisme d'entraînement d'axe Z (25) pour ajuster un espacement entre la plateforme de composants (22) et une surface d'impression de référence.

8. Appareil d'impression 3D selon l'une quelconque des revendications 6 et 7, dans lequel, l'un quelconque parmi le premier système de rayonnement d'énergie (23) et le deuxième système de rayonnement d'énergie (24) comprend : un dispositif de projection pour durcir sélectivement par exposition de surface ou un dispositif d'émission de faisceaux d'énergie pour durcir sélectivement par balayage.

9. Support de stockage lisible par ordinateur, qui stocke un premier format d'étalonnage d'un premier système de rayonnement d'énergie (23) dans un appareil d'impression 3D et un deuxième format d'étalonnage d'un deuxième système de rayonnement d'énergie (24) dans l'appareil d'impression 3D, un paquet de fichiers associé pour décrire des informations d'impression d'un modèle tridimensionnel, et un programme pour ajuster une position de placement du modèle tridimensionnel dans le paquet de fichiers associé, dans lequel le premier format d'étalonnage se rapporte à des données de format obtenues en pré-étalonnant un premier système de rayonnement d'énergie (23), et le deuxième format d'étalonnage se rapporte à des données de format obtenues en pré-étalonnant un deuxième système de rayonnement d'énergie (24), le premier format d'étalonnage chevauche partiellement le deuxième format d'étalonnage ; et un procédé d'impression selon l'une quelconque des revendications 1 à 5 est effectué lorsque le programme est exécuté par un dispositif de commande d'un appareil selon la revendication 6.
